# EUROPEAN PATENT APPLICATION

(11) **EP 4 770 229 A1**
(43) Date of publication of application: **01.07.2026**
(21) Application number: 23953296.3
(22) Date of filing: 25.09.2023
(51) Int. Cl.: H04W 72/0446

(54) **TIMING ADVANCE ADJUSTMENT METHOD AND APPARATUS, AND DEVICE**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: 2SPL Patentanwälte PartG mbB
(86) International application number: PCT/CN2023/120980
(87) International publication number: WO 2025/065127

(57) **Abstract**

Provided in the present application are a timing advance adjustment method and apparatus, and a device. The method comprises: if the time slot next to K consecutive SBFD time slots is a target time slot, determining a target timing advance value corresponding to each SBFD time slot, wherein K is a positive integer, and the target timing advance value is a target value, or the target timing advance value is calculated on the basis of a conventional timing advance value; and if the SBFD time slot comprises an uplink sub-band, on the basis of the target timing advance value corresponding to the SBFD time slot, sending uplink data to a base station on the uplink sub-band of the SBFD time slot. The technical solution of the present application improves the reliability of data transmission.

## Description

### TECHNICAL FIELD

The present application relates to the field of communication technology, and more particularly, to a timing advance adjustment method, a timing advance adjustment apparatus and a device.

### BACKGROUND

TDD (Time Division Duplex) systems are widely used in mobile communication systems, such as 5G systems. In a TDD system, a frame structure is divided into DL (DownLink) slots, UL (UpLink) slots, and S (Special) slots. The DL slot includes a plurality of DL symbols, and downlink data is processed in frequency domain resources corresponding to these DL symbols.

The UL slot includes a plurality of UL symbols, and uplink data is processed in frequency domain resources corresponding to these UL symbols. The F slot includes at least one F (Flexible) symbol, which can be used for DL, that is, processing downlink data in frequency domain resources corresponding to the F symbol. The F symbol can also be used for UL, that is, processing uplink data in frequency domain resources corresponding to the F symbol. The F symbol can also be used for GP (Guard Period), that is, protecting uplink and downlink switching in frequency domain resources corresponding to the F symbol.

A TDD system can operate in an HD (Half Duplex) mode, that is, at a same time, a same frequency domain resource can only be used for either UL or DL.

### SUMMARY

The application provides a timing advance adjustment method, applied to a UE. The method includes:
if a next slot of K contiguous SBFD slots is a target slot, determining a target timing advance value corresponding to the SBFD slots; where K is a positive integer, and the target timing advance value is a target value, or the target timing advance value is calculated based on a conventional timing advance value;
if the SBFD slots include uplink subbands, based on the target timing advance value corresponding to the SBFD slots, sending uplink data to a base station in the uplink subbands of the SBFD slots.

The application provides a timing advance adjustment method, applied to a base station. The method includes:
if a next slot of K contiguous SBFD slots is a target slot, determining a target timing advance value corresponding to the SBFD slots; where K is a positive integer, and the target timing advance value is a target value, or the target timing advance value is calculated based on a conventional timing advance value;
if the SBFD slots include uplink subbands, receiving uplink data sent by a UE in the uplink subbands of the SBFD slots based on the target timing advance value corresponding to the SBFD slots.

The application provides a timing advance adjustment apparatus, applied to a UE. The apparatus includes:
a determination module configured to, if a next slot of K contiguous SBFD slots is a target slot, determine a target timing advance value corresponding to the SBFD slots; where K is a positive integer, and the target timing advance value is a target value, or the target timing advance value is calculated based on a conventional timing advance value;
a transmission module configured to, if the SBFD slots include uplink subbands, based on the target timing advance value corresponding to the SBFD slots, send uplink data to a base station in the uplink subbands of the SBFD slots.

The application provides a timing advance adjustment apparatus, applied to a base station. The apparatus includes:
a determination module configured to, if a next slot of K contiguous SBFD slots is a target slot, determine a target timing advance value corresponding to the SBFD slots; where K is a positive integer, and the target timing advance value is a target value, or the target timing advance value is calculated based on a conventional timing advance value;
a receiving module configured to, if the SBFD slots include uplink subbands, receive uplink data sent by a UE in the uplink subbands of the SBFD slots based on the target timing advance value corresponding to the SBFD slots.

This application provides a user equipment, including a processor and a machine-readable storage medium, wherein the machine-readable storage medium stores machine executable instructions that can be executed by the processor; and the processor is configured to execute the machine executable instructions to implement the timing advance adjustment method of the above example.

This application provides a base station, including a processor and a machine-readable storage medium, wherein the machine-readable storage medium stores machine executable instructions that can be executed by the processor; and the processor is configured to execute machine executable instructions to implement the timing advance adjustment method of the above example.

From the above technical solution, it can be seen that if the next slot of K contiguous SBFD slots is the target slot (such as uplink slot or mini-slot), the target timing advance value corresponding to the SBFD slots can be the target value, or the target timing advance value corresponding to the SBFD slots can be calculated based on the conventional timing advance value. This can solve the problem of self-interference caused by time misalignment between downlink data and uplink data. It can suppress the self-interference in transmission and reception, thereby improving the reliability of data transmission.

### BRIEF DESCRIPTION OF THE DRAWINGS

FIG. 1A is a flow diagram of a timing advance adjustment method in an example of the present application;
FIG. 1B is a flow diagram of a timing advance adjustment method in an example of the present application;
FIG. 2 is a schematic diagram of a target timing advance value of 0 for SBFD slot in an example of the present application;
FIG. 3A is a schematic diagram of setting invalid symbols in an example of the present application;
FIG. 3B is a schematic diagram of a reference timing advance value of 0 for an uplink slot in an example of the present application;
FIG. 3C is a schematic diagram of a data transmission strategy in an example of the present application;
FIG. 4 is a schematic diagram of a target timing advance value of 0 for the SBFD slots in an example of the present application;
FIG. 5A is a schematic diagram of setting invalid symbols in an example of the present application;
FIG. 5B is a schematic diagram of setting invalid symbols in an example of the present application;
FIG. 5C is a schematic diagram of a reference timing advance value of 0 for non SBFD symbols in an example of the present application;
FIG. 5D is a schematic diagram of a reference timing advance value of 0 for non SBFD symbols in an example of the present application;
FIG. 5E is a schematic diagram of a data transmission strategy in an example of the present application;
FIG. 5F is a schematic diagram of a data transmission strategy in an example of the present application;
FIGS. 6A and 6B are structural diagrams of a timing advance adjustment apparatus in an example of the present application;
FIG. 7A is a schematic diagram of a structure of a base station in an example of the present application;
FIG. 7B is a schematic diagram of a structure of a user equipment in an example of the present application.

### DETAILED DESCRIPTION OF THE EMBODIMENTS

The terms used in the present disclosure are for the purpose of describing particular examples only, and are not intended to limit the present disclosure. Terms determined by "a", "the" and "said" in their singular forms in the present disclosure and the appended claims are also intended to include plurality, unless clearly indicated otherwise in the context. It should also be understood that the term "and/or" as used herein is and includes any and all possible combinations of one or more of the associated listed items.

It is to be understood that, although terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, second information may also be referred as first information. Depending on the context, the word "if" as used herein may be interpreted as "when" or "upon" or "in response to determining".

A TDD system can operate in an HD mode, that is, at a same time, a same frequency domain resource can only be used for either UL or DL. In order to make more flexible use of frequency domain resources and improve resource utilization, a TDD system can also operate in an FD (Full Duplex) mode. At a same time, a same frequency domain resource is used for both UL and DL, that is, both uplink and downlink data are processed simultaneously on the same frequency domain resource.

In a TDD system, a frame structure is divided into DL slots, UL slots, and flexible slots (F slots). The symbols in flexible slots can be configured as UL symbols, DL symbols, and F symbols. The F symbol can be used for UL, DL, or GP. The DL slot includes a plurality of DL symbols, and downlink data is processed in frequency domain resources corresponding to these DL symbols. The UL slot includes a plurality of UL symbols, and uplink data is processed in frequency domain resources corresponding to these UL symbols. The F slot includes at least one F symbol, which can be used for DL, UL, and GP. Uplink data can be transmitted in UL slots, UL symbols or F symbols in flexible slots. Uplink data cannot be transmitted in DL slots, nor can be transmitted in DL symbols in flexible slots. Downlink data can be transmitted in DL slots, DL symbols or F symbols in flexible slots. Downlink data cannot be transmitted in UL slots, nor can be transmitted in UL symbols in flexible slots.

In a TDD system, once a frame structure is determined, a UE (User Equipment) sends and receives data according to the frame structure. For a UE using an HD mode, a base station (such as gNB) schedules the UE to send or receive data according to the frame structure. For a UE using an FD mode, the base station schedules the transmission, reception, or simultaneous transmission and reception of the UE based on the frame structure. The base station configures the frame structure, notifies the UE of the frame structure, and the UE conducts data transmission and reception correctly based on this frame structure. From another perspective, after learning the frame structure, the UE can identify potential inter-the UE interference and adopt interference cancellation techniques to reduce interference and improve communication reliability.

A frame structure of TDD can be achieved through semi static configuration and dynamic indication. In high-level signaling, a plurality of SFCs (Slot Format Combinations) are defined through a Slot Format Indicator (SFI). For example, the base station can select slot formats that meet traffic requirements and add these slot formats to the SFC. Here, some slot formats can be seen in Table 1, where D represents DL symbol, U represents UL symbol, and F represents flexible symbol. For each SFC, it is identified by a fixed ID and contains one or more slot format types.

**Table 1**

| Slot Format Index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | reserved | | | | | | | | | | | | | |
| 255 | the UE determines a slot format based on tdd-UL-DL-ConfigurationCommon (UL DL Common Configuration), tdd-UL-DL-ConfigurationDedicated (UL DL Dedicated Configuration), and DCI format | | | | | | | | | | | | | |

After completing the SFI configuration, the base station sends a plurality of slot format combinations to the UE in an RRC (Radio Resource Control) message. After configuring a plurality of slot format combinations through RRC signaling, the base station performs periodic PDCCH (Physical Downlink Control Channel) in DCI (Downlink Control Information) format 2_0, informs the UE of the currently used SFC index. Upon properly receiving the information in the DCI format 2_0, the UE determines a slot format for each slot within a certain period based on the value of the SFC index. At this point, the base station and the UE complete the configuration of the frame structure through dynamic indication, and get ready for uplink and downlink data transmission.

For resource assignment, it can be divided into time domain resource assignment and frequency domain resource assignment (taking resource assignment of downlink channels as an example). Time domain resource assignment: a Time domain resource assignment field in DCI indicates a time domain position of a downlink channel, with a total of 4 bits and values ranging from 0 to 15. Assuming a value of m, then m+1 indicates a row index of the time domain resource assignment table, and information in this row indicates time domain resources of a PDSCH. There are two ways to indicate: one is to indicate three pieces of information: a slot offset between the PDSCH and a PDCCH scheduling the PDSCH, a starting symbol of the PDSCH in the slot, and a symbol length of the PDSCH duration. Another method is to indicate the slot offset between the PDSCH and the PDCCH scheduling the PDSCH, and an SLIV value. The user equipment can calculate the starting symbol and the number of incontiguous symbols of the PDSCH based on the SLIV value.

Frequency domain resource assignment: a Frequency domain resource assignment field in DCI indicates frequency domain resource assignment for a downlink channel. PDSCH frequency domain resource assignment is divided into Type 0 and Type 1. Type 0 supports incontiguous resource assignment to obtain frequency diversity gain, while Type 1 supports contiguous resource assignment, which can reduce the number of bits required for this field. DCI format 1_ 0 only supports Type 1.

Type 0: For the incontiguous resource assignment type, one RBG is one VRB group consisting of a number P of contiguous VRBs, with the number determined by high-level parameters rbg-Size and BWP bandwidth. Under the resource assignment type of Type 0, the Frequency domain resource assignment serves as a bitmap to indicate which RBGs are assigned to the downlink channel. Each bit in the bitmap represents one RBG, with the highest bit corresponding to RBG0. In this sense, a bit of 1 indicates that RBG is assigned to the downlink channel, while a bit of 0 indicates that it is not a downlink channel resource.

Type 1: The frequency domain resource indicator field does not serve as a bitmap, but rather indicates an RIV (Resource Indicator Value), from which the UE calculates the starting RB and the number of RBs occupied.

In an example, for a frame structure mainly with uplink transmission, there are usually more UL slots configured, which results in fewer DL slots and limits the downlink transmission rate, thereby increasing transmission latency for downlink data. The increased latency of downlink transmission is undesirable for downlink services. For a frame structure mainly with downlink transmission, there are usually more DL slots configured, which results in fewer UL slots and limits the uplink transmission rate, thereby increasing transmission latency for uplink data. The increased latency in uplink transmission is undesirable for uplink services.

Full duplex communication uses SBFD (Sub band full duplex) technology to improve resource utilization, that is, configuring SBFD subband resources (i.e. frequency domain resources) in BWP (BandWidth Part). SBFD subband resources include uplink and downlink subband resources. Here, in order to support FD communication, SBFD subband resources can be configured semi statically, such as through RRC signaling semi statically, or dynamically, such as through DCI.

At the same time, data from different directions is transmitted through SBFD subband resources. For example, in BWP of a DL slot, SBFD subband resources are configured to transmit uplink data through SBFD subband resources, such that uplink data can be transmitted in the DL slot. SBFD subband resources are configured in BWP of DL symbols in a flexible slot, to transmit uplink data through SBFD subband resources, such that uplink data can be transmitted in DL symbols in the flexible slot.

SBFD subband resources are configured in BWP of an UL slot, to transmit downlink data through SBFD subband resources, such that downlink data can be transmitted in the UL slot. SBFD subband resources are configured in BWP of UL symbols in a flexible slot, to transmit downlink data through SBFD subband resources, such that downlink data can be transmitted in UL symbols in the flexible slot.

A slot for configuring SBFD subband resources can be referred to as an SBFD slot, and a symbol for configuring SBFD subband resources can be referred to as an SBFD symbol. Therefore, SBFD subband resources can be frequency domain resources either in an SBFD slot or in an SBFD symbol. The SBFD symbol can be a symbol configured with an SBFD subband. On the SBFD subbands of these SBFD symbols, the base station and the UE can engage in full duplex communication, that is, on the SBFD subband resources, uplink transmission, downlink transmission, or simultaneous uplink and downlink transmission can be carried out.

An SBFD subband resource can be explicitly indicated as uplink, downlink, or flexible. When the SBFD subband resource is indicated as Flexible, it can be flexibly scheduled uplink or downlink in the SBFD subband resource. If the SBFD subband resource is not explicitly indicated, it means it is flexible and can be used to transmit uplink or downlink data. Here, the configuration of SBFD symbols can include: which symbols in DL slots, UL slots, and F slots are used for SBFD transmission, and the implementation period and starting point.

In an example, Timing Advance (TA) is used for uplink transmission of the UE, which means that a system frame in which the UE sends uplink data is a certain amount of time ahead of a corresponding downlink frame. The specific amount of advance is calculated by the base station based on a random access preamble sent by the UE. Then, the base station notifies the UE through a Timing Advance Command (TAC). There are no restrictions on the calculation method of this advance amount in this embodiment. For the convenience of differentiation, this advance amount is referred to as a conventional timing advance value.

In a TDD system, if both SBFD technology and timing advance technology are supported, SBFD technology utilizes frequency domain resources to distinguish the downlink and uplink, and allows the base station to simultaneously transmit downlink data and receive uplink data. However, due to the simultaneous transmission and reception of downlink and uplink data by the base station, and the conventional timing advance value of the UE N_{TA}, _{offset}>0, it can lead to differences in the timing of downlink and uplink symbols, resulting in FFT time misalignment between the downlink data transmission and uplink data reception of the base station, thereby increasing the difficulty for the base station in suppressing self-interference during transmission and reducing the reliability of data transmission.

In view of the above, in a TDD subband full duplex mode, this embodiment provides a timing advance adjustment method for TDD full duplex, which is used to solve the problem of FFT time misalignment between the downlink data transmission and uplink data reception of the base station at the same time, so as to further enhance the self-interference capability of the base station.

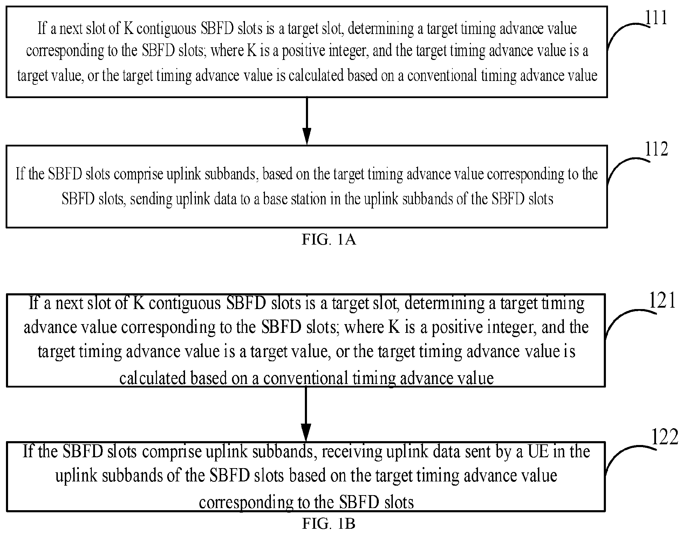

An example of the present application provides a timing advance adjustment method, which can be applied to a UE. Refer to FIG. 1A, which is a flow diagram of the timing advance adjustment method. The method can include the following steps.

Step 111, if a next slot of K contiguous SBFD slots is a target slot, a target timing advance value corresponding to the SBFD slots is determined, where K is a positive integer, and the target timing advance value can be a target value, or the target timing advance value can be calculated based on a conventional timing advance value.

In an example, an SBFD slot is a slot that includes both SBFD symbols and non SBFD symbols (such as uplink or downlink symbols), or an SBFD slot is a slot that includes only SBFD symbols.

Step 112, if the SBFD slots include uplink subbands, based on the target timing advance value corresponding to the SBFD slots, uplink data is transmitted to the base station in the uplink subbands of the SBFD slots.

An example of the present application provides a timing advance adjustment method, which can be applied to a base station. Refer to FIG. 1B, which is a flow diagram of the timing advance adjustment method. The method can include the following steps.

Step 121, if a next slot of K contiguous SBFD slots is a target slot, a target timing advance value corresponding to the SBFD slots is determined. Here, K is a positive integer, and the target timing advance value can be a target value, or the target timing advance value can be calculated based on a conventional timing advance value.

Step 122, if the SBFD slots include uplink subbands, based on the target timing advance value corresponding to the SBFD slots, uplink data sent by the UE is received in the uplink subbands of the SBFD slots.

From the above technical solution, it can be seen that if the next slot of K contiguous SBFD slots is the target slot (such as uplink slot or mini-slot), the target timing advance value corresponding to the SBFD slots can be the target value, or the target timing advance value corresponding to the SBFD slots can be calculated based on the conventional timing advance value. This can solve the problem of self-interference caused by time misalignment between downlink data and uplink data. It can suppress the self-interference in transmission and reception, thereby improving the reliability of data transmission.

In an example, the target value can be 0 or any value between 0 and a conventional timing advance value, without any restrictions on this target value. Calculating the target timing advance value based on a conventional timing advance value can include: the target timing advance value being a product of the conventional timing advance value and an adjustment factor. The conventional timing advance value is obtained from the preamble of the UE, and the adjustment factor is a value between 0 and 1. The adjustment factor can be 0, 1, or greater than 0 but less than 1, such as 1/2, 1/4, 1/8, 1/16, etc. However, based on the conventional timing advance value, other methods can also be used to calculate the target timing advance value, such as subtracting a certain value from the conventional timing advance value, and adding a root sign to the conventional timing advance value, without any restrictions.

In an example, for K contiguous SBFD slots, when determining the target timing advance value corresponding to the K SBFD slots, the target timing advance value corresponding to each SBFD slot can be determined separately. The target timing advance value corresponding to different SBFD slots can be the same or different. When determining the target timing advance value corresponding to K SBFD slots, the target timing advance value corresponding to the first SBFD slot can be determined, which serves as the target timing advance value corresponding to K SBFD slots.

Scenario 1: The target timing advance value corresponding to the SBFD slots can be the target value.

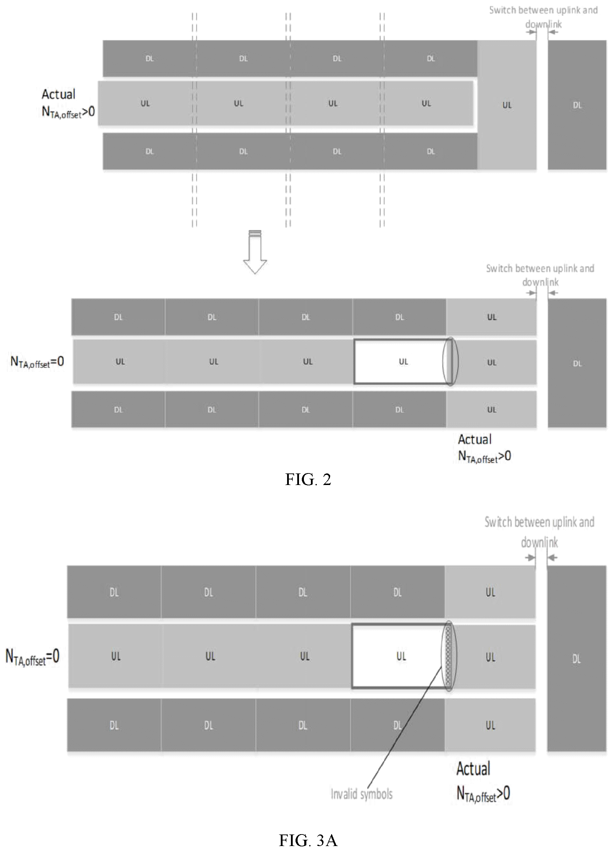

In an example, for the SBFD slots, the target timing advance value corresponding to the SBFD slots can be the target value. Taking the target value as 0 as example, that is, the target timing advance value (N_{TA}, _{offset}) is set to 0. As shown in FIG. 2, when the SBFD slots and the uplink slot (i.e. the uplink non SBFD slot) are respectively configured in different slots, that is, when the next slot of K contiguous SBFD slots is an uplink slot (i.e. the target slot is an uplink slot), for the SBFD slots, the target timing advance value of the SBFD slots is set to 0.

In an example, in order to set the target timing advance value of the SBFD slots to 0, the UE needs to support two or more Timing Advance Groups (TAGs) on the same carrier. For example, one timing advance group is used to support a target timing advance value of 0, while the other timing advance group is used to support a target timing advance value of a conventional timing advance value. For example, one timing advance group is used to support the target timing advance value being a product of the conventional timing advance value and an adjustment factor, while the other timing advance group is used to support the target timing advance value being a conventional timing advance value. For example, one timing advance group is used to support a target timing advance value of 0, another timing advance group is used to support a target timing advance value being a product of the conventional timing advance value and an adjustment factor, and another timing advance group is used to support a target timing advance value being a conventional timing advance value. However, the above are just a few examples of a plurality of timing advance groups, and there are no restrictions on this.

To set the target timing advance value of the SBFD slots to 0, the following implementations can be adopted.

Implementation a1: The base station determines a target timing advance value corresponding to the SBFD slots, and the target timing advance value is 0. The base station sends a timing advance command to the UE, and the timing advance command includes information that the target timing advance value is 0. The timing advance command is used to make the UE determine that the target timing advance value corresponding to the SBFD slots is 0.

The UE receives the timing advance command sent by the base station, and based on this timing advance command, determines that the target timing advance value corresponding to the SBFD slots is 0. In this way, based on the target timing advance value (i.e. 0) corresponding to the SBFD slots, the UE can send uplink data to the base station in uplink subbands of the SBFD slots.

In an example, for K SBFD slots, if K is greater than 1, the base station sends a separate timing advance command for each SBFD slot, that is, a total of K timing advance commands are sent. The K timing advance commands correspond to K SBFD slots one by one, and each timing advance command carries information that the target timing advance value corresponding to the SBFD slots is 0. Alternatively, the base station sends one timing advance command for K SBFD slots, which carries information that the target timing advance value corresponding to K SBFD slots is 0.

Implementation a2: Both the base station and the UE are configured with a fixed advance value (such as 0). If the next slot of K contiguous SBFD slots is an uplink slot, the base station can obtain the configured fixed advance value and based on the fixed advance value, determine the target timing advance value corresponding to the SBFD slots as 0. The UE can obtain the configured fixed advance value, and based on the fixed advance value, determine the target timing advance value corresponding to the SBFD slots as 0.

In an example, for K SBFD slots, the base station determines that the target timing advance values corresponding to the K SBFD slots are all 0 based on the fixed advance value, while the UE determines that the target timing advance values corresponding to K SBFD slots are all 0 based on the fixed advance value. In this way, based on the target timing advance value (i.e. 0) corresponding to the SBFD slots, the UE can send uplink data to the base station in uplink subbands of the SBFD slots.

In an example, as shown in FIG. 2, if the target timing advance value corresponding to the SBFD slots is 0, and the timing advance value N_{TA}, _{offset} of the uplink slot (i.e. the uplink non SBFD slot) after the SBFD slot, is the actual value (i.e. the conventional timing advance value, and the conventional timing advance value N_{TA}, _{offset} is greater than 0), this will cause the UE to have two contiguous back to back PUSCHs transmissions (such as repetition typeB), due to the timing advance values N_{TA}, _{offset} of these two PUSCHs are different, result in transmission interference between PUSCHs.

In view of the above, in an example, the following implementations can also be used for processing.

Implementation b1: In order to solve the problem of the transmission interference between the SBFD slot and the uplink slot of the same UE, the base station and the UE can set invalid symbols in the SBFD slot, or the base station and the UE can set invalid symbols in the uplink slot to solve the problem of the transmission interference between slots.

For example, the base station sets contiguous M symbols starting from the last symbol in the last SBFD slot of the K contiguous SBFD slots as invalid symbols. The UE sets contiguous M symbols starting from the last symbol in the last SBFD slot of the K contiguous SBFD slots as invalid symbols.

For another example, the base station sets contiguous M symbols starting from the first symbol in the uplink slot (i.e. the next slot of the K SBFD slots) as invalid symbols. The UE sets contiguous M symbols starting from the first symbol in the uplink slot as invalid symbols. Here, M can be a positive integer.

After setting the contiguous M symbols in the SBFD slot as invalid symbols, or setting the contiguous M symbols in the uplink slot as invalid symbols, if the uplink data occupies the positions of the invalid symbols, the UE prohibits sending uplink data to the base station on the invalid symbols, and the base station does not receive uplink data on the invalid symbols.

Alternatively, if the uplink data occupies both the positions of invalid symbols and available symbols, the UE can perform rate matching on the uplink data and send rate matched uplink data to the base station on the available symbols, and the base station can receive rate matched uplink data on the available symbols.

As shown in FIG. 3A, which is a schematic diagram of setting invalid symbols in an SBFD slot or an uplink slot, the last M symbols (such as the last one or more symbols) of the SBFD slot are set as invalid symbols, or the first M symbols (such as the first or first few symbols) of the uplink slot are set as invalid symbols.

When the time-frequency resources of PUSCH/PUCCH sent by the UE overlap with invalid symbols, the time-frequency resources of invalid symbols will be invalid. If the time-frequency resources of PUSCH/PUCCH only occupy the positions of invalid symbols, prohibiting sending uplink data through the time-frequency resources of PUSCH/PUCCH. If the time-frequency resources of PUSCH/PUCCH occupy the positions of invalid symbols and available symbols, rate matching is performed.

For example, when the UE sends two contiguous PUSCHs in the SBFD slot and the uplink slot, PUSCH # 1 occupies the last 5 symbols of the SBFD slot, PUSCH # 2 occupies the first 5 symbols of the uplink slot, and the SBFD slot is adjacent to the uplink slot. In this case, if the base station sets the invalid symbols to 1 and the invalid symbols are configured in the SBFD slot, PUSCH # 1 occupies 4 symbols of the SBFD slot (except for the last symbol). The UE needs to recalculate the available time-frequency resources and perform corresponding rate matching, and send the uplink data after the rate matching on the available time-frequency resources. PUSCH # 2 occupies the first 5 symbols of the uplink slot.

If the base station sets the invalid symbols to 1 and the invalid symbols are configured in the uplink slot, PUSCH # 1 occupies 5 symbols of the SBFD slot, and PUSCH # 2 occupies 4 symbols of the uplink slot (except for the first symbol). The UE needs to recalculate the available time-frequency resources and perform corresponding rate matching.

In an example, the base station can determine invalid symbol configuration information and send it to the UE, and the UE receives the invalid symbol configuration information. Here, the invalid symbol configuration information includes an invalid symbol enable indicator, an invalid symbol position indicator, and an invalid symbol number indicator. Here, the invalid symbol enable indicator is used to indicate whether the invalid symbols are enabled or not; the invalid symbol position indicator is used to indicate whether the invalid symbols are located in the SBFD slot or in the uplink slot; the invalid symbol number indicator is used to indicate a number of the invalid symbols.

The UE sets the contiguous M symbols starting from the last symbol in the last SBFD slot as invalid symbols based on the invalid symbol enable indicator, the invalid symbol position indicator, and the invalid symbol number indicator, or sets the contiguous M symbols starting from the first symbol in the uplink slot as invalid symbols.

For example, if the invalid symbol enable indicator is used to indicate that the invalid symbols are not enabled, then the UE does not set the invalid symbol. If the invalid symbol enable indicator is used to indicate that the invalid symbols are enabled, the invalid symbol position indicator is used to indicate that the invalid symbols are located in the SBFD slot, and the invalid symbol number indicator indicates that the number of invalid symbols is M, then the UE sets the contiguous M symbols starting from the last symbol in the last SBFD slot as invalid symbols. If the invalid symbol enable indicator is used to indicate that the invalid symbols are enabled, the invalid symbol position indicator is used to indicate that the invalid symbols are located in the uplink slot, and the invalid symbol number indicator indicates that the number of invalid symbols is M, then the UE sets the contiguous M symbols starting from the first symbol in the uplink slot as invalid symbols.

In an example, the base station can determine invalid symbol configuration information and send it to the UE, and the UE receives the invalid symbol configuration information. Here, the invalid symbol configuration information includes an invalid symbol position indicator and an invalid symbol number indicator. Here, the invalid symbol position indicator is used to indicate whether the invalid symbols are located in the SBFD slot or in the uplink slot. The invalid symbol number indicator indicates the number of invalid symbols.

The UE sets the contiguous M symbols starting from the last symbol in the last SBFD slot as invalid symbols, or sets the contiguous M symbols starting from the first symbol in the uplink slot as invalid symbols, based on the invalid symbol position indicator and the invalid symbol number indicator.

For example, if the invalid symbol position indicator is used to indicate that the invalid symbols are located in the SBFD slot, and the invalid symbol number indicator is used to indicate that the number of invalid symbols is M, then the UE sets the contiguous M symbols starting from the last symbol in the last SBFD slot as invalid symbols. If the invalid symbol position indicator is used to indicate that the invalid symbols are located in the uplink slot, and the invalid symbol number indicator is used to indicate that the number of invalid symbols is M, then the UE sets the contiguous M symbols starting from the first symbol in the uplink slot as invalid symbols.

In an example, the base station can obtain configured fixed invalid symbol configuration information, and the UE can obtain configured fixed invalid symbol configuration information. Here, the invalid symbol configuration information includes an invalid symbol enable indicator, an invalid symbol position indicator, and an invalid symbol number indicator. Alternatively, the invalid symbol configuration information includes an invalid symbol position indicator and an invalid symbol number indicator. Here, the invalid symbol enable indicator is used to indicate whether the invalid symbols are enabled or not. The invalid symbol position indicator is used to indicate whether the invalid symbols are located in the SBFD slot or in the uplink slot. The invalid symbol number indicator indicates the number of invalid symbols.

The UE sets the contiguous M symbols starting from the last symbol in the last SBFD slot as invalid symbols, or sets the contiguous M symbols starting from the first symbol in the uplink slot as invalid symbols, based on the invalid symbol enable indicator, the invalid symbol position indicator, and the invalid symbol number indicator.

Alternatively, the UE sets the contiguous M symbols starting from the last symbol in the last SBFD slot as invalid symbols, or sets the contiguous M symbols starting from the first symbol in the uplink slot as invalid symbols based on invalid symbol position indicator and invalid symbol number indicator.

In an example, invalid symbols can be configured in the SBFD slot or the uplink slot. For example, the base station and the UE can pre-configure/predetermine in advance that the invalid symbol position indicator can be fixed configuration.

Alternatively, the base station can configure through a DCI message, an RRC message, or an MAC-CE message. For example, the base station sends a DCI message, an RRC message, or an MAC-CE message to the UE, and the DCI message, the RRC message, or the MAC-CE message includes an invalid symbol position indicator (1 bit). The invalid symbol position indicator is used to indicate that the invalid symbols are configured in the SBFD slot or the uplink slot, as shown in Table 2.

**Table 2**

| IE | Bit | Note |
|---|---|---|
| Invalidsymbol position | 1 | 0:in SBFD slot; 1: UL non-SBFD slot |

In an example, the number of invalid symbols can be one or more symbols (i.e. M symbols). For example, the base station and the UE can agree in advance, indicating that the number of invalid symbols can be a fixed configuration.

Alternatively, the base station can be configured through a DCI message, an RRC message, or an MAC-CE message. For example, the base station sends a DCI message, an RRC message, or an MAC-CE message to the UE, and the DCI message, the RRC message, or the MAC-CE message include an indicator of the number of invalid symbols (n bits, n can be set to 2 or other values). The number of invalid symbols indicates the number of invalid symbols, as shown in Table 3.

**Table 3**

| IE | Bits | Note |
|---|---|---|
| numberOflnvalidSymbols | 2 | 00: Invalid symbol set as 1 OFDM symbol |
| (Number of invalid symbols between SBFD slot and uplink slot) | | 01: Invalid symbols set as 2 OFDM symbols |
| | | 10: Invalid symbols set as 3 OFDM symbols |
| | | 11: Invalid symbols set as 4 OFDM symbols |

In an example, invalid symbols can be effective (i.e. enabled) or not effective (i.e. not enabled). For example, the base station and the UE can agree in advance that the invalid symbol enable indicator can be a fixed configuration.

Alternatively, the base station can configure through a DCI message, an RRC message, or an MAC-CE message. For example, the base station sends a DCI message, an RRC message, or an MAC-CE message to the UE, and the DCI message, the RRC message, or the MAC-CE message includes an invalid symbol enable indicator (1 bit). The invalid symbol enable indicator is used to indicate whether the invalid symbols are enabled or not, as shown in Table 4. Here, the invalid symbol enable indicator is optional, or it can be directly invalidated without setting the invalid symbol enable indicator.

**Table 4**

| IE | Bits | Note |
|---|---|---|
| Invalidsymbol enabling | 1 | 0:not enable invalid symbols |
| ( enable switch for invalid symbols between SBFD slot and uplink slot) | | 1: enable invalid symbols |

Implementation b2: In order to solve the problem of the transmission interference between SBFD slot and uplink slot of the same UE, a reference timing advance value corresponding to the uplink slot can be determined, and then the problem of the transmission interference between slots can be solved by setting the advance timing N_{TA}, _{offset} of the uplink slot to the reference timing advance value.

In an example, the reference timing advance value can be a target value, which can be 0 or any value between 0 and the conventional timing advance value, without any restrictions on this target value.

Alternatively, the reference timing advance value is calculated based on the conventional timing advance value. Calculating the reference timing advance value based on the conventional timing advance value can include: the reference timing advance value being a product of the conventional timing advance value and a reference factor. The conventional timing advance value is obtained from the preamble of the UE, and the reference factor is a value between 0 and 1. The reference factor can be either 0 or 1, and can also be greater than 0 and less than 1, such as 1/2, 1/4, 1/8, 1/16, etc. The reference factor and the adjustment factor can be the same or different.

Alternatively, the reference timing advance value can be the same as the target timing advance value. For example, the target timing advance value of the SBFD slots can be directly used as the reference timing advance value of the uplink slot.

In an example, for an uplink slot, the reference timing advance value corresponding to the uplink slot can be the target value. Taking the target value as 0, the reference timing advance value (NTA, offset) is set to 0.

To set the reference timing advance value corresponding to the uplink slot to 0, the following implementation can be used.

In an example, the base station determines the reference timing advance value corresponding to the uplink slot, and the reference timing advance value is 0. The base station sends a timing advance command to the UE, and the timing advance command includes information with a reference timing advance value of 0. The timing advance command is used to make the UE determine that the reference timing advance value corresponding to the uplink slot is 0.

The UE receives the timing advance command sent by the base station, and based on this timing advance command, determines that the reference timing advance value corresponding to the uplink slot is 0. In this way, based on the reference timing advance value corresponding to the uplink slot (i.e. 0), the UE sends uplink data to the base station in the uplink slot, and the base station receives uplink data in the uplink slot.

In an example, both the base station and the UE are configured with a fixed advance values (such as 0). If the next slot of K contiguous SBFD slots is an uplink slot, the base station can obtain the configured fixed advance value and based on the fixed advance value, determine the reference timing advance value corresponding to the uplink slot as 0. The UE can obtain the configured fixed advance value, and based on the fixed advance value, determine the reference timing advance value corresponding to the uplink slot as 0.

In this way, based on the reference timing advance value corresponding to the uplink slot (i.e. 0), the UE sends uplink data to the base station in the uplink slot, and the base station receives the uplink data sent by the UE in the uplink slot.

In an example, the base station can determine the reference timing advance value corresponding to the uplink slot, and the reference timing advance value is the same as the target timing advance value corresponding to the SBFD slots, that is, both the reference timing advance value and the target timing advance value are 0. If the reference timing advance value is the same as the target timing advance value, the base station can send a timing advance follow command to the UE. The timing advance follow command can include information that the reference timing advance value is the same as the target timing advance value. The timing advance follow command is used to make the UE determine whether the reference timing advance value corresponding to the uplink slot is the same as the target timing advance value corresponding to the SBFD slots.

The UE receives the timing advance follow command sent by the base station. If the timing advance follow command indicates that the reference timing advance value corresponding to the uplink slot is the same as the target timing advance value corresponding to the SBFD slots, the UE determines the reference timing advance value corresponding to the uplink slot based on the target timing advance value.

Accordingly, the base station and the UE can set the reference timing advance value N_{TA}, _{offset} of the uplink slot to 0, and solve the problem of the transmission interference between slots by setting the reference timing advance value N_{TA}, _{offset} to 0, that is, setting the timing advance value of all back to back PUSCHs (a plurality of PUSCHs that are consecutively transmitted without gaps in between, and the plurality of PUSCHs can be transmitted repeatedly) transmitted between the SBFD slot and the uplink slot to 0 (i.e., the reference timing advance value and the target timing advance value are both 0), in order to avoid inter symbol interference (ISI) in the uplink slot through the cyclic prefix CP (cyclic prefix) of OFDM.

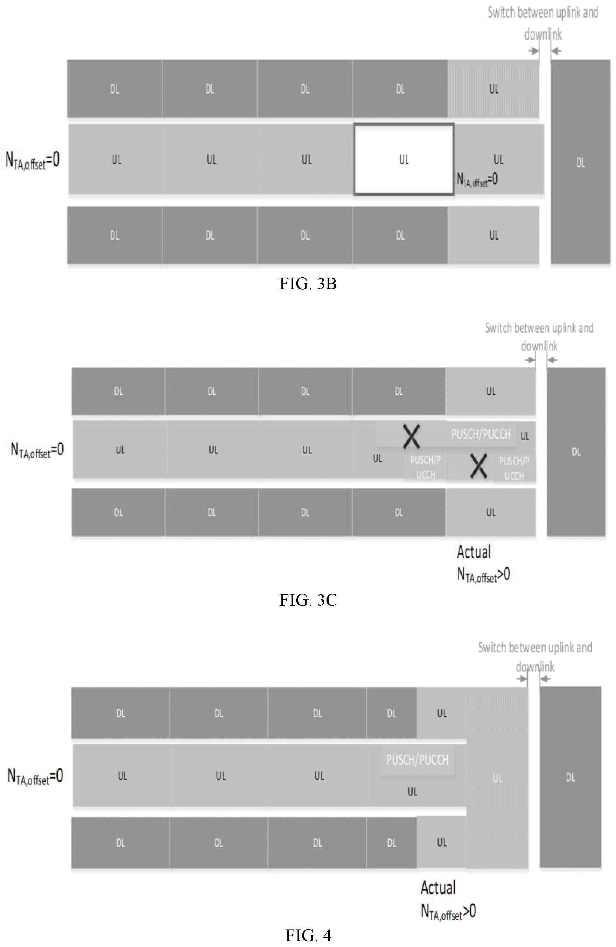

As shown in FIG. 3B, for the case where the next slot of the SBFD slots is an uplink slot, the reference timing advance value N_{TA}, _{offset} of the uplink slot can be set to 0 to solve the transmission interference problem.

In an example, in order to provide more scheduling flexibility to the base station, the base station can indicate whether to implement the reference timing advance value N_{TA}, _{offset} of the uplink slot being 0 by carrying 1 bit through a DCI message, an RRC message, or an MAC-CE message, as shown in Table 5. This is an example of a timing advance follow command. If the indicated value of the timing advance follow command is 0, it means that the reference timing advance value is different from the target timing advance value, and the reference timing advance value is the conventional timing advance value. If the indicated value of the timing advance follow command is 1, it means that the reference timing advance value is the same as the target timing advance value. For example, the reference timing advance value can be 0.

**Table 5**

| IE | Bits | Note |
|---|---|---|
| N_{TA,offset} setting for UL slot after SBFD slot | 1 | 0: setting N_{TA,offset} based on conventional timing advance value |
| | | 1: N_{TA,offset} of uplink slot is the same as N_{TA,offset} of adjacent SBFD slot |

Implementation b3: In order to solve the problem of the transmission interference between SBFD slot and uplink slot of the same UE, the data transmission strategy for SBFD slot or uplink slot can be set to solve the problem of the transmission interference between SBFD slot or uplink slot. For example, the data transmission strategy is: if the UE needs to transmit consecutive uplink data in the last SBFD slot of K contiguous SBFD slots and the uplink slot (i.e. the next slot of the last SBFD slot), the UE prohibits sending the last uplink data in the last SBFD slot, or the UE prohibits sending the first uplink data in that uplink slot.

For example, the base station and the UE can agree that when the UE sends two contiguous PUSCHs in the SBFD slot and the uplink slot, the UE can drop the PUSCH in the SBFD slot, or the UE can drop the PUSCH in the uplink slot. Here, if there are a plurality of consecutively transmitted PUSCHs on the uplink slot, the UE only drops the first PUSCH on the uplink slot. If there are a plurality of consecutively transmitted PUSCHs on the SBFD slot, then the UE only drops the last PUSCH on the SBFD slot.

For example, as shown in FIG. 3C, which is a schematic diagram of setting a data transmission strategy for the SBFD slot or the uplink slot. If the UE needs to transmit consecutive uplink data (such as PUSCH or PUCCH) in the SBFD slot and the uplink slot, the UE prohibits sending the last PUSCH or PUCCH in the SBFD slot, or the UE prohibits sending the first PUSCH or PUCCH in the uplink slot.

Scenario 2: The target timing advance value corresponding to the SBFD slots can be calculated based on the conventional timing advance value. For example, the target timing advance value is the product of the conventional timing advance value and the adjustment factor, and the adjustment factor is a value between 0 and 1, such as 1, 1/2, 1/4, 1/8, 1/16, 0, etc.

In an example, for the SBFD slots, the target timing advance value corresponding to the SBFD slots can be the product of the conventional timing advance value and the adjustment factor. For example, when the next slot of K contiguous SBFD slots is an uplink slot (i.e. the target slot is an uplink slot), the target timing advance value (N_{TA, offset}) corresponding to the SBFD slots can be set as the product of the conventional timing advance value and the adjustment factor.

For example, for SBFD slots, the target timing advance value (N_{TA, offset}) can be set to non 0, that is, 0<N_{TA, offset}<conventional timing advance value. If the target timing advance value is the product of conventional timing advance value and adjustment factor, it can also be other values, as long as 0<N_{TA, offset}<conventional timing advance value is met, taking the target timing advance value being the product of conventional timing advance value and adjustment factor as an example. To set the target timing advance value of the SBFD slots to the product of the conventional timing advance value and the adjustment factor, the following implementation can be used.

Implementation c1: The base station determines the target timing advance value corresponding to the SBFD slots, and the target timing advance value is the product of the conventional timing advance value and the adjustment factor. The base station sends a timing advance command to the UE, and the timing advance command includes information on the target timing advance value. Here, the timing advance command is used to make the UE determine that the target timing advance value corresponding to the SBFD slots is the product of the conventional timing advance value and the adjustment factor.

The UE receives a timing advance command sent by the base station, and based on this timing advance command, determines that the target timing advance value corresponding to the SBFD slots is the product of the conventional timing advance value and the adjustment factor. For example, the timing advance command includes the product value of the conventional timing advance value and the adjustment factor. Therefore, the UE determines that the target timing advance value is the product value. In this way, based on the target timing advance value corresponding to the SBFD slots (i.e. the product of the conventional timing advance value and the adjustment factor), the UE sends uplink data to the base station in uplink subbands of the SBFD slots.

In an example, for K SBFD slots, if K is greater than 1, the base station sends a separate timing advance command for each SBFD slot, that is, a total of K timing advance commands are sent. The K timing advance commands correspond to K SBFD slots one by one, and each timing advance command carries information on the target timing advance value corresponding to the SBFD slots. Alternatively, the base station sends one timing advance command for K SBFD slots, and the timing advance command carries information on the target timing advance value corresponding to K SBFD slots.

Implementation c2: The base station determines the target timing advance value corresponding to the SBFD slots, and the target timing advance value is the product of the conventional timing advance value and the adjustment factor. The base station sends a first timing advance command and a second timing advance command to the UE. The first timing advance command includes information on the adjustment factor, and the first timing advance command is used to make the UE determine the adjustment factor corresponding to the SBFD slots. The second timing advance command includes information on the conventional timing advance value, and the second timing advance command is used to make the UE determine the conventional timing advance value corresponding to the SBFD slots.

The UE receives the first timing advance command and the second timing advance command sent by the base station, determines the adjustment factor corresponding to the SBFD slots based on the first timing advance command, and determines the conventional timing advance value corresponding to the SBFD slots based on the second timing advance command. The UE determines the target timing advance value corresponding to the SBFD slots based on the adjustment factor and the conventional timing advance value. In this way, based on the target timing advance value corresponding to the SBFD slots, the UE can send uplink data to the base station in uplink subbands of the SBFD slots.

In an example, for K SBFD slots, if K is greater than 1, the base station will send a first and a second timing advance command separately for each SBFD slot, that is, a total of K first and K second timing advance commands will be sent. The K first timing advance commands correspond to K SBFD slots one by one, and the K second timing advance commands correspond to K SBFD slots one by one.

Alternatively, the base station sends a first timing advance command and a second timing advance command for K SBFD slots. The first timing advance command carries information on the adjustment factor corresponding to K SBFD slots, and the second timing advance command carries information on the conventional timing advance value corresponding to K SBFD slots.

In an example, the base station can send the adjustment factor through a DCI message, an RRC message, or an MAC-CE message. After receiving the adjustment factor, the UE can calculate the target timing advance value corresponding to the SBFD slots using the following formula: TA=M_{TAfactor} * V_{TA commands}, where TA represents the target timing advance value, M_{TAfactor} represents the adjustment factor, and V_{TA commands} represents the conventional timing advance value.

Here, the value of M_{TAfactor} should not only ensure that it does not cause FFT time misalignment between the uplink data transmission and downlink data reception of the base station, but also ensure that there is no interference in the transmission between the SBFD slot and the uplink slot.

In an example, the first timing advance command can be a DCI message, an RRC message, or an MAC-CE message, and the first timing advance command includes the adjustment factor, as shown in Table 6.

**Table 6**

| IE | Bits | Note |
|---|---|---|
| TA factor (adjustment factor of SBFD slot) | 2 | 00: 1/2, 01: 1/4, 10: 1/8, 11: 1/16 |

Implementation c3: Both the base station and the UE are configured with fixed adjustment factors (such as 1/2, 1/4, 1/8, 1/16, etc.). If the next slot of K contiguous SBFD slots is an uplink slot, the base station obtains the configured fixed adjustment factor and based on the fixed adjustment factor and the conventional timing advance value corresponding to the SBFD slots, determines the target timing advance value corresponding to the SBFD slots. The UE obtains the configured fixed adjustment factor and based on the fixed adjustment factor and the conventional timing advance value corresponding to the SBFD slots, determines the target timing advance value corresponding to the SBFD slots.

In an example, for K SBFD slots, the base station determines that the target timing advance values corresponding to K SBFD slots are all the product of the conventional timing advance value and the fixed adjustment factor, while the UE determines that the target timing advance values corresponding to K SBFD slots are all the product of the conventional timing advance value and the fixed adjustment factor. In this way, based on the target timing advance value corresponding to the SBFD slots (the product of the conventional timing advance value and the fixed adjustment factor), the UE can send uplink data to the base station in uplink subbands of the SBFD slots.

In an example, if the target timing advance value corresponding to the SBFD slots is the product of the conventional timing advance value and the adjustment factor, and the timing advance value N_{TA, offset} of the uplink slot (i.e. the uplink non SBFD slot) after the SBFD slots is the actual value (i.e. the conventional timing advance value), this will cause the UE to have two contiguous back to back PUSCHs transmissions (such as repetition typeB). Due to the different timing advance values N_{TA}, _{offset} of these two PUSCHs, this leads to transmission interference between PUSCHs.

In view of the above, in an example, the following implementations can also be used for processing.

Implementation d1: In order to solve the problem of the transmission interference between the SBFD slot and the uplink slot of the same UE, the base station and the UE can set invalid symbols in the SBFD slot, or the base station and the UE can set invalid symbols in the uplink slot to solve the problem of the transmission interference between slots.

For example, the base station sets the contiguous M symbols starting from the last symbol in the last SBFD slot of K contiguous SBFD slots as invalid symbols. The UE sets the contiguous M symbols starting from the last symbol in the last SBFD slot of K contiguous SBFD slots as invalid symbols.

For another example, the base station sets contiguous M symbols starting from the first symbol in the uplink slot (i.e. the next slot of K SBFD slots) as invalid symbols. The UE sets contiguous M symbols starting from the first symbol in the uplink slot as invalid symbols. Here, M can be a positive integer.

After setting the contiguous M symbols in the SBFD slot as invalid symbols, or setting the contiguous M symbols in the uplink slot as invalid symbols, if the uplink data occupies the positions of the invalid symbols, the UE prohibits sending uplink data to the base station on the invalid symbols, and the base station does not receive uplink data on the invalid symbols.

Alternatively, if the uplink data occupies both the positions of invalid symbols and available symbols, the UE can perform rate matching on the uplink data and send rate matched uplink data to the base station on the available symbols, and the base station can receive rate matched uplink data on the available symbols.

In an example, implementation d1 is similar to implementation b1 and will not be repeated here.

Implementation d2: In order to solve the problem of the transmission interference between SBFD slot and uplink slot of the same UE, a reference timing advance value corresponding to the uplink slot can be determined, and then the problem of the transmission interference between slots can be solved by setting the advance timing N_{TA}, _{offset} of the uplink slot to the reference timing advance value.

In an example, the reference timing advance value can be the target value, which can be 0 or any value between 0 and the conventional timing advance value, without any restrictions on this target value.

Alternatively, the reference timing advance value is calculated based on the conventional timing advance value. Calculating the reference timing advance value based on the conventional timing advance value can include: the reference timing advance value being a product of the conventional timing advance value and a reference factor. The conventional timing advance value is obtained from the preamble of the UE, and the reference factor is a value between 0 and 1. The reference factor can be either 0 or 1, and can also be greater than 0 and less than 1, such as 1/2, 1/4, 1/8, 1/16, etc. The reference factor and adjustment factor can be the same or different.

Alternatively, the reference timing advance value can be the same as the target timing advance value. For example, the target timing advance value of the SBFD slots can be directly used as the reference timing advance value of the uplink slot.

In an example, to ensure that there is no FFT time misalignment between the uplink data transmission and downlink data reception of the base station, and to ensure that there is no interference in transmission between the SBFD slot and the uplink slot, and to avoid inter symbol interference (ISI) in the uplink slot, the reference timing advance value can be the product of the conventional timing advance value and a reference factor, and the reference factor is the same as the adjustment factor. For example, TA=M_{TAfactor} * V_{TA commands}, where TA represents the reference timing advance value, M_{TAfactor} represents the reference factor (i.e. the adjustment factor), and V_{TA commands} represent the conventional timing advance value. Alternatively, the reference timing advance value is the same as the target timing advance value.

Setting the reference timing advance value corresponding to the uplink slot to the product of the conventional timing advance value and the reference factor, or setting the reference timing advance value to the target timing advance value, the following implementation can be used.

In an example, the base station determines the reference timing advance value corresponding to the uplink slot, and the reference timing advance value is the product of the conventional timing advance value and the reference factor. The base station sends a timing advance command to the UE, and the timing advance command includes information on the reference timing advance value. Here, the timing advance command is used to make the UE determine that the reference timing advance value corresponding to the uplink slot is the product of the conventional timing advance value and the reference factor.

The UE receives a timing advance command sent by the base station, and based on this timing advance command, determines the reference timing advance value corresponding to the uplink slot as the product of the conventional timing advance value and the reference factor. For example, the timing advance command includes the product value of the conventional timing advance value and the reference factor. Therefore, the UE determines that the reference timing advance value is the product value. In this way, based on the reference timing advance value corresponding to the uplink slot (i.e. the product of the conventional timing advance value and the reference factor), the UE sends uplink data to the base station in the uplink slot.

In an example, the base station determines the reference timing advance value corresponding to the uplink slot, and the reference timing advance value is the product of the conventional timing advance value and the reference factor. The base station sends the first timing advance command and the second timing advance command to the UE. The first timing advance command includes information on the reference factor, and the first timing advance command is used to make the UE determine the reference factor corresponding to the uplink slot. The second timing advance command includes information on the conventional timing advance value, which is used to make the UE determine the conventional timing advance value corresponding to the uplink slot.

The UE receives the first timing advance command and the second timing advance command sent by the base station. The UE determines the reference factor corresponding to the uplink slot based on the first timing advance command. The UE determines the conventional timing advance value corresponding to the uplink slot based on the second timing advance command. The UE determines the reference timing advance value corresponding to the uplink slot based on the reference factor and the conventional timing advance value. In this way, based on the reference timing advance value corresponding to the uplink slot, the UE can send uplink data to the base station in the uplink slot.

The base station can send the reference factor corresponding to the uplink slot through a DCI message, an RRC message, or an MAC-CE message. After receiving the reference factor, the UE can calculate the reference timing advance value corresponding to the uplink slot using the following formula: TA=M_{TAfactor} * V_{TA commands}, where TA represents the reference timing advance value, M_{TAfactor} represents the reference factor, and V_{TA commands} represents the conventional timing advance value.

In an example, both the base station and the UE are configured with fixed reference factors (such as 1/2, 1/4, 1/8, 1/16, etc.). If the next slot of K contiguous SBFD slots is an uplink slot, the base station obtains the configured fixed reference factor and based on the fixed reference factor and the conventional time advance value corresponding to the uplink slot, determines the reference timing advance value corresponding to the uplink slot. The UE obtains the configured fixed reference factor and based on the fixed reference factor and the conventional timing advance value corresponding to the uplink slot, determines the reference timing advance value corresponding to the uplink slot.

Based on the reference timing advance value corresponding to the uplink slot (the product of the conventional timing advance value and the fixed reference factor), the UE can send uplink data to the base station in the uplink slot.

In an example, the base station determines the reference timing advance value corresponding to the uplink slot, and the reference timing advance value is the same as the target timing advance value corresponding to the SBFD slots, that is, the target timing advance value is the product of the conventional timing advance value and the adjustment factor, and the reference timing advance value is the product of the conventional timing advance value and the adjustment factor.

Here, if the reference timing advance value is the same as the target timing advance value, the base station can send a timing advance follow command to the UE. The timing advance follow command can include information that the reference timing advance value is the same as the target timing advance value. The timing advance follow command is used to make the UE determine whether the reference timing advance value corresponding to the uplink slot is the same as the target timing advance value corresponding to the SBFD slots.

The UE receives the timing advance follow command sent by the base station. If the timing advance follow command indicates that the reference timing advance value corresponding to the uplink slot is the same as the target timing advance value corresponding to the SBFD slots, the UE determines the reference timing advance value corresponding to the uplink slot based on the target timing advance value.

Accordingly, the base station and the UE set the reference timing advance value N_{TA}, _{offset} of the uplink slot to the product of the conventional timing advance value and the reference factor, and solve the problem of the transmission interference between slots through the reference timing advance value N_{TA, offset}, that is, by setting the timing advance values of all back to back PUSCHs transmitted between the SBFD slot and the uplink slot to the product of the conventional timing advance value and the reference factor (reference factor and adjustment factor are the same), in order to avoid inter symbol interference (ISI) in the uplink slot through the cyclic prefix CP of OFDM.

Implementation d3: In order to solve the problem of the transmission interference between SBFD slot and uplink slot of the same UE, the data transmission strategy for SBFD slot or uplink slot can be set to solve the problem of the transmission interference between SBFD slot or uplink slot. For example, the data transmission strategy is: if the UE needs to transmit consecutive uplink data in the last SBFD slot of K contiguous SBFD slots and the uplink slot (i.e. the next slot of the last SBFD slot), the UE prohibits sending the last uplink data in the last SBFD slot, or the UE prohibits sending the first uplink data in that uplink slot.

In an example, implementation d3 is similar to implementation b3 and will not be repeated here.

Scenario 3: The target timing advance value corresponding to the SBFD slots can be the target value. Compared to Scenario 1, the next slot of SBFD slot is a mini-slot, rather than an uplink slot. A mini-slot can also be referred to as a sub slot, and a mini-slot includes both SBFD symbols and non SBFD symbols. A SBFD slot can also be understood as a mini-slot, where a SBFD slot includes both SBFD symbols and non SBFD symbols (such as uplink or downlink symbols), or a SBFD slot includes only SBFD symbols.

In an example, the target timing advance value corresponding to the SBFD slots can be the target value. Taking the target value of 0 as an example, that is, the target timing advance value (N_{TA, offset}) is set to 0. As shown in FIG. 4, when the SBFD slot and the mini-slot are configured in different slots, that is, when the next slot of K contiguous SBFD slots is a mini-slot (i.e. the target slot is a mini-slot), the target timing advance value of the SBFD slots is set to 0. Regarding the implementation of setting the target timing advance value to 0, reference can be made to Scenario 1, which will not repeated herein.

In an example, as shown in FIG. 4, if the next slot of the SBFD slots is a mini-slot, and the mini-slot includes both SBFD symbols and non SBFD symbols, that is, SBFD symbols and non SBFD symbols (such as uplink non SBFD symbols) are configured within the same slot, then there are two situations, as follows.

The first situation: the UE has two contiguous back to back PUSCH transmissions, with one PUSCH's time-frequency resource occupying SBFD symbols and the other PUSCH's time-frequency resource occupying non SBFD symbols. If the timing advance value N_{TA, offset} of the SBFD symbols is 0, and the timing advance value N_{TA, offset} of the subsequent non SBFD symbols is the actual value (i.e. the conventional timing advance value, and the conventional timing advance value N_{TA, offset} is greater than 0), then the different timing advance values N_{TA, offset} of these two PUSCHs will cause transmission interference between PUSCHs.

The second situation: the UE has one PUSCH time-frequency resource that spans SBFD symbols and non SBFD symbols, which results in transmission interference between OFDM symbols when the timing advance values N_{TA, offset} for different symbols of a PUSCH are different, i.e. transmission interference between the SBFD symbols and the non SBFD symbols.

In view of the above, in an example, the following implementations can also be used for processing.

Implementation e1: For the SBFD symbols in the mini-slot, the target timing advance value corresponding to the SBFD symbols can be a target value, and the target value can be 0 or the conventional timing advance value, or any value between 0 and the conventional timing advance value, without any restrictions on this target value. Alternatively, the target timing advance value corresponding to the SBFD symbols is calculated based on the conventional timing advance value. Calculating the target timing advance value based on the conventional timing advance value can include: the target timing advance value being the product of the conventional timing advance value and the adjustment factor. The conventional timing advance value is obtained from the preamble of the UE, and the adjustment factor is a value between 0 and 1. The adjustment factor can be 0, 1, or greater than 0 but less than 1, such as 1/2, 1/4, 1/8, 1/16, etc.

In an example, the target timing advance value corresponding to the SBFD symbols and the target timing advance value corresponding to the SBFD slots can be the same or different. For example, if the target timing advance value corresponding to the SBFD slots is 0, then the target timing advance value corresponding to the SBFD symbols is also 0. Regarding how to set the target timing advance value corresponding to the SBFD symbols to 0, reference can be made to Scenario 1, which will not repeated herein.

Implementation e2: In order to solve the problem of the transmission interference between SBFD symbols and non SBFD symbols, the base station and the UE can set invalid symbols on SBFD symbols, or the base station and the UE can set invalid symbols on non SBFD symbols to solve the problem of the transmission interference between symbols.

For example, the base station sets contiguous N symbols starting from the last symbol of the SBFD symbols (i.e. all SBFD symbols in the mini-slot) as invalid symbols. The UE sets contiguous N symbols starting from the last symbol of the SBFD symbols (i.e. all SBFD symbols in the mini-slot) as invalid symbols.

For example, a base station can set N contiguous symbols starting from the first symbol of the non SBFD symbols (i.e. all non SBFD symbols in the mini-slot) as invalid symbols. The UE can set N contiguous symbols starting from the first symbol of the non SBFD symbols (i.e. all non SBFD symbols in the mini-slot) as invalid symbols. Here, N can be a positive integer, such as 1, 2, 3, etc.

After setting N contiguous symbols in SBFD symbols as invalid symbols or N contiguous symbols in non SBFD symbols as invalid symbols, if the uplink data occupies the positions of the invalid symbols, the UE prohibits sending uplink data to the base station on the invalid symbols, and the base station does not receive uplink data on the invalid symbols.

Alternatively, if the uplink data occupies both the positions of invalid symbols and available symbols, and the available symbols are either SBFD symbols or non SBFD symbols, the UE can perform rate matching on the uplink data, sending rate matched uplink data to the base station on the available symbols, and the base station receiving rate matched uplink data.

Alternatively, if the uplink data occupies both the positions of invalid symbols and available symbols, and the available symbols include both SBFD and non SBFD symbols, the UE can perform rate matching on the uplink data, send rate matched uplink data to the base station on the available symbols, and the base station can receive rate matched uplink data on the available symbols. Alternatively, the UE prohibits sending uplink data to the base station.

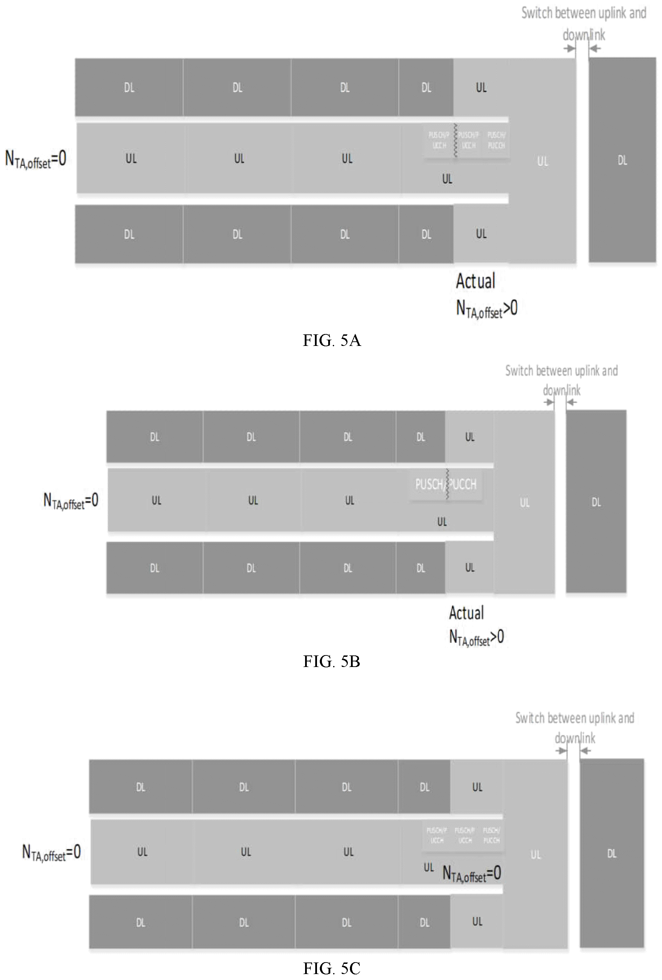

For example, when the UE has two contiguous PUSCH transmissions, where one PUSCH's time-frequency resource occupies SBFD symbols and the other PUSCH's time-frequency resource occupies non SBFD symbols, as shown in FIG. 5A, the N contiguous symbols of the SBFD symbols can be set as invalid symbols, or the N contiguous symbols of the non SBFD symbols can be set as invalid symbols. In this case, if the uplink data occupies both the positions of invalid symbols and available symbols, and the available symbols are either SBFD symbols or non SBFD symbols, the UE can perform rate matching on the uplink data and send the rate matched uplink data to the base station on the available symbols.

For example, when the UE has a PUSCH time-frequency resource that spans SBFD symbols and non SBFD symbols, as shown in FIG. 5B, N contiguous symbols of the SBFD symbols can be set as invalid symbols, or N contiguous symbols of the non SBFD symbols can be set as invalid symbols. In this case, if the uplink data occupies both the positions of invalid symbols and available symbols, and the available symbols include both SBFD and non SBFD symbols, the UE can perform rate matching on the uplink data and send the rate matched uplink data to the base station on the available symbols. Alternatively, the UE prohibits sending uplink data to the base station.

In an example, the base station can determine invalid symbol configuration information and send it to the UE, and the UE receives the invalid symbol configuration information. Here, the invalid symbol configuration information includes an invalid symbol enable indicator, an invalid symbol position indicator, and an invalid symbol number indicator. The invalid symbol enable indicator is used to indicate whether the invalid symbols are enabled or not. The invalid symbol position indicator is used to indicate whether the invalid symbols are located in the SBFD symbols or in the non SBFD symbols. The invalid symbol number indicator is used to indicate a number of the invalid symbols.

The UE sets the contiguous N symbols starting from the last symbol of the SBFD symbols as invalid symbols based on the invalid symbol enable indicator, the invalid symbol position indicator, and the invalid symbol number indicator, or sets the contiguous N symbols starting from the first symbol of the non SBFD symbols as invalid symbols.

For example, if the invalid symbol enable indicator is used to indicate that the invalid symbols are not enabled, then the UE does not set the invalid symbols. If the invalid symbol enable indicator is used to indicate that the invalid symbols are enabled, the invalid symbol position indicator is used to indicate that the invalid symbols are located in the SBFD symbols, and the invalid symbol number indicator is used to indicate a number of the invalid symbols N, then the UE sets the contiguous N symbols starting from the last symbol of the SBFD symbols as invalid symbols.

If the invalid symbol enable indicator is used to indicate that the invalid symbols are enabled, the invalid symbol position indicator is used to indicate that the invalid symbols are located in a non SBFD symbols, and the invalid symbol number indicator is used to indicate a number of the invalid symbols N, then the UE sets the contiguous N symbols starting from the first symbol of the non SBFD symbols as invalid symbols.

In an example, the base station can determine invalid symbol configuration information and send it to the UE, and the UE receives the invalid symbol configuration information. Here, the invalid symbol configuration information includes an invalid symbol position indicator and an invalid symbol number indicator. Here, the invalid symbol position indicator is used to indicate whether the invalid symbols are located in the SBFD symbols or in the non SBFD symbols. The invalid symbol number indicator indicates the number of invalid symbols.

The UE sets the contiguous N symbols starting from the last symbol of the SBFD symbols as invalid symbols based on the invalid symbol position indicator and the invalid symbol number indicator, or sets the contiguous N symbols starting from the first symbol of the non SBFD symbols as invalid symbols.

For example, if the invalid symbol position indicator is used to indicate that the invalid symbols are located in the SBFD symbols, the invalid symbol number indicator is used to indicate that the number of invalid symbols is N, then the UE sets the contiguous N symbols starting from the last symbol of the SBFD symbols as invalid symbols. If the invalid symbol position indicator is used to indicate that the invalid symbols are located in the non SBFD symbols, and the invalid symbol number indicator is used to indicate that the number of invalid symbols is N, the UE sets the contiguous N symbols starting from the first symbol of the non SBFD symbols as invalid symbols.

In an example, the base station can obtain configured fixed invalid symbol configuration information, and the UE can obtain configured fixed invalid symbol configuration information. Here, the invalid symbol configuration information includes an invalid symbol enable indicator, an invalid symbol position indicator, and an invalid symbol number indicator. Alternatively, the invalid symbol configuration information includes invalid an invalid symbol position indicator and an invalid symbol number indicator. Here, the invalid symbol enable indicator is used to indicate whether the invalid symbols are enabled or not. The invalid symbol position indicator is used to indicate whether the invalid symbols are located in the SBFD symbols or in the non SBFD symbols. The invalid symbol number indicator indicates the number of invalid symbols.

The UE sets the contiguous N symbols starting from the last symbol of the SBFD symbols as invalid symbols based on the invalid symbol enable indicator, the invalid symbol position indicator, and the invalid symbol number indicator, or sets the contiguous N symbols starting from the first symbol of the non SBFD symbols as invalid symbols.

Alternatively, the UE sets the contiguous N symbols starting from the last symbol of the SBFD symbols as invalid symbols based on the invalid symbol position indicator and the invalid symbol number indicator, or sets the contiguous N symbols starting from the first symbol of the non SBFD symbols as invalid symbols.

In an example, invalid symbols can be configured in SBFD symbols or non SBFD symbols. For example, the base station and the UE can agree in advance that the invalid symbol position indicator can be a fixed configuration. Alternatively, the base station can be configured through a DCI message, an RRC message, or an MAC-CE message.

In an example, the number of invalid symbols can be one or more symbols (i.e. N symbols). For example, the base station and the UE can agree in advance, indicating that the number of invalid symbols can be a fixed configuration. Alternatively, the base station can be configured through a DCI message, an RRC message, or an MAC-CE message.

In an example, invalid symbols can be effective (i.e. enabled) or not effective (i.e. not enabled). For example, the base station and the UE can agree in advance that the invalid symbol enable indicator can be a fixed configuration. Alternatively, the base station can be configured through a DCI message, an RRC message, or an MAC-CE message.

Implementation e3: In order to solve the problem of the transmission interference between SBFD symbols and non SBFD symbols, the reference timing advance value corresponding to non SBFD symbols can be determined, and then the transmission interference between symbols can be solved by setting the advance timing N_{TA, offset} of non SBFD symbols to the reference timing advance value.

The reference timing advance value corresponding to non SBFD symbols can be a target value, which can be 0 or the conventional timing advance value, or any value between 0 and the conventional timing advance value, without any restrictions on this target value.

Alternatively, the reference timing advance value corresponding to non SBFD symbols is calculated based on the conventional timing advance value. Calculating the reference timing advance value based on the conventional timing advance value includes: the reference timing advance value being the product of the conventional timing advance value and the reference factor. The conventional timing advance value is obtained from the preamble of the UE, and the reference factor is a value between 0 and 1. The reference factor can be 0, 1, greater than 0 and less than 1, such as 1/2, 1/4, 1/8, 1/16, etc. The reference factor and adjustment factor can be the same or different.

Alternatively, the reference timing advance value corresponding to non SBFD symbols can be the same as the target timing advance value corresponding to SBFD symbols. For example, the target timing advance value is directly used as the reference timing advance value.

In an example, for a PUSCH of which the time-frequency resources span SBFD symbols and non SBFD symbols, it is necessary to ensure that the target timing advance values of the SBFD symbols and of the non SBFD symbols are the same, that is, the reference timing advance values corresponding to the non SBFD symbols are the same as the target timing advance values corresponding to the SBFD symbols.

In an example, for non SBFD symbols of mini-slots, the reference timing advance value can be the target value. Taking the target value as an example, the reference timing advance value (N_{TA, offset}) is set to 0.

To set the reference timing advance value corresponding to non SBFD symbols to 0, the following implementation can be used.

In an example, the base station determines the reference timing advance value corresponding to non SBFD symbols, and the reference timing advance value is 0. The base station sends a timing advance command to the UE, and the timing advance command includes information that the reference timing advance value is 0. The timing advance command is used to make the UE determine that the reference timing advance value for non SBFD symbols is 0.

The UE receives the timing advance command sent by the base station and determines the reference timing advance value corresponding to non SBFD symbols as 0 based on the timing advance command. In this way, based on the reference timing advance value (0) corresponding to non SBFD symbols, the UE sends uplink data to the base station on non SBFD symbols, and the base station receives uplink data on non SBFD symbols.

In an example, both the base station and the UE are configured with fixed advance values (such as 0). For mini-slots with SBFD symbols and non SBFD symbols, the base station can obtain the configured fixed advance value and based on the fixed advance value, determine the reference timing advance value corresponding to the non SBFD symbols as 0. The UE can obtain the configured fixed advance value and based on the fixed advance value, determine the reference timing advance value corresponding to non SBFD symbols as 0.

In this way, based on the reference timing advance value (i.e. 0) corresponding to non SBFD symbols, the UE sends uplink data to the base station on non SBFD symbols, and the base station receives uplink data sent by the UE on non SBFD symbols.

In an example, the base station can determine the reference timing advance value corresponding to non SBFD symbols, and the reference timing advance value is the same as the target timing advance value corresponding to SBFD symbols, that is, both the reference timing advance value and the target timing advance value are 0. If the reference timing advance value is the same as the target timing advance value, the base station sends a timing advance follow command to the UE. The timing advance follow command can include information that the reference timing advance value is the same as the target timing advance value. The timing advance follow command is used to make the UE determine whether the reference timing advance value corresponding to non SBFD symbols is the same as the target timing advance value corresponding to SBFD symbols.

The UE receives a timing advance follow command sent by the base station. If the timing advance follow command indicates that the reference timing advance value corresponding to the non SBFD symbols is the same as the target timing advance value corresponding to the SBFD symbols, the UE determines the reference timing advance value corresponding to the non SBFD symbols based on the target timing advance value.

Accordingly, the base station and the UE can set the reference timing advance value N_{TA, offset} of non SBFD symbols to 0, and solve the problem of the transmission interference between symbols by setting the reference timing advance value N_{TA, offset} to 0.

For example, when the UE has two contiguous PUSCH transmissions, with one PUSCH's time-frequency resource occupying the SBFD symbols and the other PUSCH's time-frequency resource occupying the non SBFD symbols, as shown in FIG. 5C, the reference timing advance value N_{TA, offset} for the non SBFD symbols can be set to 0.

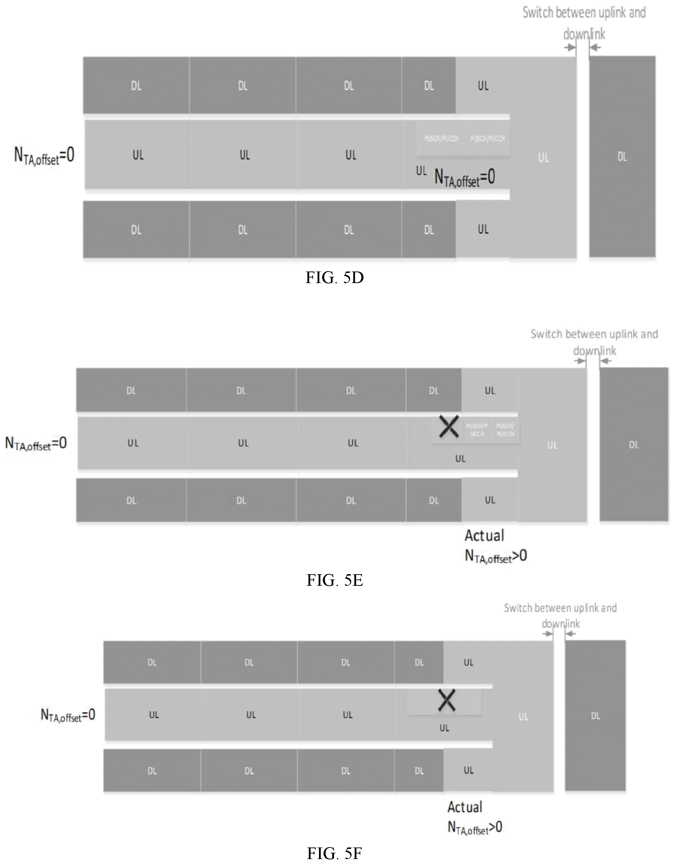

For another example, when the UE has a PUSCH time-frequency resource that spans SBFD symbols and non SBFD symbols, as shown in FIG. 5D, the reference timing advance value N_{TA, offset} for non SBFD symbols can be set to 0.

Implementation e4: In order to solve the problem of the transmission interference between SBFD symbols and non SBFD symbols, the data transmission strategy for SBFD symbols or non SBFD symbols can be set. For example, the data transmission strategy is: if the UE needs to transmit consecutive uplink data between the last SBFD symbol (i.e. the last SBFD symbol in the mini-slot) and the first non SBFD symbol (i.e. the first non SBFD symbol in the mini-slot), the UE can prohibit sending the last uplink data to the base station on the last SBFD symbol. Alternatively, the UE can prohibit sending the first uplink data to the base station on the first non SBFD symbol.

For example, the base station and the UE can agree that when the UE sends two contiguous PUSCHs (or PUSCHs) between SBFD symbols and non SBFD symbols (UL non SBFD symbols), the UE can drop PUSCHs on SBFD symbols, or the UE can drop PUSCHs on non SBFD symbols.

Here, if there are a plurality of consecutively transmitted PUSCHs on the non SBFD symbols, the UE only drops the first PUSCH on the non SBFD symbols. Alternatively, if there are a plurality of consecutively transmitted PUSCHs on the SBFD symbols, the UE only drops the last PUSCH on the SBFD slot.

For example, when the UE has two contiguous PUSCH transmissions, one PUSCH's time-frequency resources occupy SBFD symbols, and the other PUSCH's time-frequency resources occupy non SBFD symbols, as shown in FIG. 5E, which is a schematic diagram of setting the data transmission strategy for SBFD symbols or non SBFD symbols. If the UE needs to transmit consecutive uplink data (such as PUSCH or PUCCH) between SBFD symbols and non SBFD symbols, the UE prohibits sending the last PUSCH or PUCCH to the base station on the last SBFD symbol, or the UE prohibits sending the first PUSCH or PUCCH to the base station on the first non SBFD symbol.

Implementation e5: In order to solve the problem of the transmission interference between SBFD symbols and non SBFD symbols, a data transmission strategy can be set for SBFD symbols or non SBFD symbols. For example, the data transmission strategy can be: if the UE needs to transmit uplink data in a mini-slot, and the uplink data occupies both an SBFD symbol and a non SBFD symbol, the UE prohibits sending the uplink data to the base station. For example, the base station and the UE can agree that when the time-frequency resources of a PUSCH (or PUCCH) span SBFD symbols and non SBFD symbols, the UE can drop the PUSCH, that is, not send the uplink data carried by the PUSCH.

For example, when the UE has a PUSCH time-frequency resource that spans SBFD symbols and non SBFD symbols, as shown in FIG. 5F, which is a schematic diagram of setting the data transmission strategy for SBFD symbols or non SBFD symbols. If the UE needs to transmit the same uplink data (such as uplink data carried by PUSCH or PUCCH) on both SBFD and non SBFD symbols, the UE prohibits sending the uplink data to the base station.

Scenario 4: The target timing advance value corresponding to the SBFD slots is calculated based on the conventional timing advance value. For example, the target timing advance value is the product of the conventional timing advance value and the adjustment factor, and the adjustment factor is a value between 0 and 1, such as 1, 1/2, 1/4, 1/8, 1/16, 0, etc. Compared to Scenario 2, the next slot of the SBFD slots is a mini-slot, which includes both SBFD symbols and non SBFD symbols.

In an example, the target timing advance value corresponding to the SBFD slots can be the product of the conventional timing advance value and the adjustment factor. For example, when the next slot of K contiguous SBFD slots is a mini-slot (i.e. the target slot is a mini-slot), the target timing advance value of the SBFD slots is set to the product of the conventional timing advance value and the adjustment factor. Regarding the method of setting the target timing advance value, reference can be made to Scenario 2, which will not be repeated herein.

In an example, if the next slot of the SBFD slots is a mini-slot, and the mini-slot includes both SBFD symbols and non SBFD symbols, that is, SBFD symbols and non SBFD symbols (such as uplink non SBFD symbols) are configured within the same slot, then the following implementation can also be used for processing.

Implementation f1: For the SBFD symbols in the mini-slot, the target timing advance value corresponding to the SBFD symbols can be the target value, and the target value can be 0. Alternatively, the target timing advance value corresponding to the SBFD symbols is calculated based on the conventional timing advance value. For example, the target timing advance value is the product of the conventional timing advance value and the adjustment factor, which is a value between 0 and 1. The adjustment factor can be either 0 or 1, or greater than 0 and less than 1, such as 1/2, 1/4, 1/8, 1/16, etc.

In an example, the target timing advance value corresponding to the SBFD symbols and the target timing advance value corresponding to the SBFD slots can be the same or different. For example, if the target timing advance value corresponding to the SBFD slots is the product of the conventional timing advance value and the adjustment factor, then the target timing advance value corresponding to the SBFD symbols is also the product of the conventional timing advance value and the adjustment factor. Here, regarding how to set the target timing advance value corresponding to the SBFD symbols, reference can be made to Scenario 1, which will not be repeated herein.

Implementation f2: In order to solve the problem of the transmission interference between SBFD symbols and non SBFD symbols, the base station and the UE can set invalid symbols on SBFD symbols, or the base station and the UE can set invalid symbols on non SBFD symbols. For example, the base station sets the contiguous N symbols starting from the last symbol of the SBFD symbols as invalid symbols. The UE sets the contiguous N symbols starting from the last symbol of the SBFD symbols as invalid symbols. Alternatively, the base station sets the contiguous N symbols starting from the first symbol of the non SBFD symbols as invalid symbols. The UE sets N contiguous symbols starting from the first symbol of the non SBFD symbols as invalid symbols. Here, N is a positive integer.

After setting N contiguous symbols of SBFD symbols as invalid symbols or N contiguous symbols of non SBFD symbols as invalid symbols, if the uplink data occupies the positions of the invalid symbols, the UE prohibits sending uplink data to the base station on the invalid symbols, and the base station does not receive uplink data on the invalid symbols.

Alternatively, if the uplink data occupies both the positions of invalid symbols and available symbols, and the available symbols are either SBFD symbols or non SBFD symbols, the UE can perform rate matching on the uplink data, sending rate matched uplink data to the base station on the available symbols, and the base station receiving rate matched uplink data.

Alternatively, if the uplink data occupies both the positions of invalid symbols and available symbols, and the available symbols include both SBFD and non SBFD symbols, the UE can perform rate matching on the uplink data, send rate matched uplink data to the base station on the available symbols, and the base station can receive rate matched uplink data on the available symbols. Alternatively, the UE prohibits sending uplink data to the base station.

In an example, implementation f2 is similar to implementation e2, which will not be repeated herein.

Implementation f3: In order to solve the problem of the transmission interference between SBFD symbols and non SBFD symbols, the reference timing advance value corresponding to non SBFD symbols can be determined, and then the problem of the transmission interference between symbols can be solved by setting the advance timing N_{TA, offset} of non SBFD symbols to the reference timing advance value.

The reference timing advance value corresponding to non SBFD symbols can be a target value, and the target value can be 0.

Alternatively, the reference timing advance value corresponding to non SBFD symbols is calculated based on the conventional timing advance value. For example, the reference timing advance value is the product of the conventional timing advance value and the reference factor, and the reference factor is a value between 0 and 1. The reference factor can be 0, 1, greater than 0 and less than 1, such as 1/2, 1/4, 1/8, 1/16, etc. The reference factor and adjustment factor can be the same or different.

Alternatively, the reference timing advance value corresponding to non SBFD symbols can be the same as the target timing advance value corresponding to SBFD symbols. For example, the target timing advance value can be directly used as the reference timing advance value.

To ensure that there is no FFT time misalignment between uplink data transmission and downlink data reception, and to ensure that there is no interference in the transmission between SBFD symbols and non SBFD symbols, the reference timing advance value is the product of the conventional timing advance value and the reference factor, and the reference factor is the same as the adjustment factor. For example, TA=M_{TAfactor} * V_{TA commands}, where TA represents the reference timing advance value, M_{TAfactor} represents the reference factor (i.e. adjustment factor), and V_{TA commands} represent the conventional timing advance value. Alternatively, the reference timing advance value is the same as the target timing advance value. Here, the value of M_{TAfactor} should not only ensure that there is no FFT time misalignment between the uplink data reception and downlink data transmission of the base station, but also ensure that there is no interference between SBFD symbols and non SBFD symbols.

To set the reference timing advance value corresponding to non SBFD symbols as the product of the conventional timing advance value and the reference factor, or to set the reference timing advance value as the target timing advance value, the following implementation can be used.

In an example, the base station determines the reference timing advance value corresponding to non SBFD symbols, and the reference timing advance value is the product of the conventional timing advance value and the reference factor. The base station sends a timing advance command to the UE, and the timing advance command includes information on the reference timing advance value. Here, the timing advance command is used to make the UE determine that the reference timing advance value corresponding to non SBFD symbols is the product of the conventional timing advance value and the reference factor.

The UE receives the timing advance command sent by the base station and determines the reference timing advance value corresponding to non SBFD symbols as the product of the conventional timing advance value and the reference factor based on the timing advance command. For example, the timing advance command includes the product value of the conventional timing advance value and the reference factor. Therefore, the UE determines that the reference timing advance value is the product value. In this way, based on the reference timing advance value (i.e. the product of the conventional timing advance value and the reference factor) corresponding to the non SBFD symbols, the UE sends uplink data to the base station on the non SBFD symbols.

In an example, the base station determines the reference timing advance value corresponding to non SBFD symbols, and the reference timing advance value is the product of the conventional timing advance value and the reference factor. The base station sends a first timing advance command and a second timing advance command to the UE. The first timing advance command includes information on the reference factor, and the first timing advance command is used to make the UE determine the reference factor corresponding to non SBFD symbols. The second timing advance command includes information on the conventional timing advance value, and the second timing advance command is used to cause the UE to determine the conventional timing advance value.

The UE receives the first timing advance command and the second timing advance command sent by the base station. The UE determines the reference factor corresponding to non SBFD symbols based on the first timing advance command. The UE determines the conventional timing advance value corresponding to non SBFD symbols based on the second timing advance command. The UE determines the reference timing advance value corresponding to non SBFD symbols based on the reference factor and the conventional timing advance value. In this way, based on the reference timing advance value corresponding to non SBFD symbols, the UE can send uplink data to the base station in non SBFD symbols.

The base station can send a reference factor corresponding to non SBFD symbols through a DCI message, an RRC message, or an MAC-CE message. After receiving this reference factor, the UE can calculate the reference timing advance value corresponding to non SBFD symbols using the following formula: TA=M_{TAfactor} * V_{TA commands}, where TA represents the reference timing advance value, M_{TAfactor} represents the reference factor, and V_{TA commands} represents the conventional timing advance value.

In an example, both the base station and the UE are configured with fixed reference factors (such as 1/2, 1/4, 1/8, 1/16, etc.). If the next slot of K contiguous SBFD slots is a mini-slot, and the mini-slot includes both SBFD symbols and non SBFD symbols, the base station obtains the configured fixed reference factor and based on the fixed reference factor and the conventional timing advance value corresponding to non SBFD symbols, determines the reference timing advance value corresponding to the non SBFD symbols. The UE obtains the configured fixed reference factor and based on the fixed reference factor and the conventional timing advance value corresponding to non SBFD symbols, determines the reference timing advance value corresponding to non SBFD symbols. Based on the reference timing advance value corresponding to non SBFD symbols, the UE can send uplink data to the base station on non SBFD symbols.

In an example, the base station determines the reference timing advance value corresponding to non SBFD symbols. The reference timing advance value is the same as the target timing advance value of SBFD symbols, that is, the target timing advance value is the product of the conventional timing advance value and the adjustment factor, and the reference timing advance value is the product of the conventional timing advance value and the adjustment factor.

If the reference timing advance value is the same as the target timing advance value, the base station can send a timing advance follow command to the UE, and the timing advance follow command can include information that the reference timing advance value is the same as the target timing advance value. The timing advance follow command is used to make the UE determine whether the reference timing advance value corresponding to non SBFD symbols is the same as the target timing advance value corresponding to SBFD symbols.

The UE receives a timing advance follow command sent by the base station. If the timing advance follow command indicates that the reference timing advance value corresponding to the non SBFD symbols is the same as the target timing advance value corresponding to the SBFD symbols, the UE determines the reference timing advance value corresponding to the non SBFD symbols based on the target timing advance value.

Accordingly, the base station and the UE can set the reference timing advance value N_{TA, offset} of non SBFD symbols to the product of the conventional timing advance value and the adjustment factor, thereby solving the problem of transmission interference between symbols.

Implementation f4: In order to solve the problem of the transmission interference between SBFD symbols and non SBFD symbols, data transmission strategy for SBFD symbols or non SBFD symbols can be set. For example, the data transmission strategy is: if the UE needs to transmit consecutive uplink data between the last SBFD symbol and the first non SBFD symbol, the UE can prohibit sending the last uplink data to the base station on the last SBFD symbol. Alternatively, the UE can prohibit sending the first uplink data to the base station on the first non SBFD symbol.

In an example, implementation f4 is similar to implementation e4, which will not be repeated herein.

Implementation f5: In order to solve the problem of the transmission interference between SBFD symbols and non SBFD symbols, data transmission strategy for SBFD symbols or non SBFD symbols can be set. For example, the data transmission strategy can be: if the UE needs to transmit uplink data in a mini-slot, and the uplink data occupies both an SBFD symbol and a non SBFD symbol, the UE prohibits sending the uplink data to the base station.

In an example, implementation f5 is similar to implementation e5, which will not be repeated herein.

In an example, the base station and the UE can also support a fallback mechanism. For example, the base station sends an enable indicator to the UE, and the enable indicator is a first value. The first value is used to indicate that the UE determines that the target timing advance value corresponding to the SBFD slots is a target value, or that the target timing advance value is calculated based on the conventional timing advance value. The UE receives the enable indicator sent by the base station. If the enable indicator is the first value, the UE determines that the target timing advance value corresponding to the SBFD slots is the target value, or the target timing advance value is calculated based on the conventional timing advance value. In this case, Scenarios 1 to 4 can be used for processing.

For example, the base station sends an enable indicator to the UE, and the enable indicator is a second value. The second value is used to indicate that the UE determines that the target timing advance value corresponding to the SBFD slots is the conventional timing advance value. The UE receives the enable indicator sent by the base station. If the enable indicator is the second value, the UE determines that the target timing advance value corresponding to the SBFD slots is the conventional timing advance value. In this case, the processing is based on the conventional timing advance value.

From the above technical solution, it can be seen that if the next slot of K contiguous SBFD slots is the target slot (such as uplink slot or mini-slot), the target timing advance value corresponding to the SBFD slots can be the target value, or the target timing advance value corresponding to the SBFD slots can be calculated based on the conventional timing advance value. This can solve the problem of self-interference caused by time misalignment between downlink data and uplink data. It can suppress the self-interference in transmission and reception, thereby improving the reliability of data transmission.

Without affecting the 5G system, the problem of base station suppression of self-interference in transmission and reception caused by different timing of downlink and uplink symbols in SBFD configuration, the interference problem between SBFD slot and uplink slot, and the interference problem between SBFD symbols and non SBFD symbols when setting advance timing NTA, offset=0 for SBFD slots/symbols, has been solved. The base station can more flexibly utilize SBFD resources to schedule the UE's uplink and downlink services to support simultaneous transmission and reception in the TDD system. It can increase uplink transmission resources and cell coverage, reduce transmission latency, and increase uplink transmission capacity.

Both SBFD symbols and non SBFD symbols can be required to use TA=MTAfactor * VTA commands, which ensures that there is no FFT time misalignment between the uplink reception and downlink transmission of the base station, and ensures that there is no interference in the transmission between SBFD symbols and non SBFD symbols, and avoiding non SBFD symbol to symbol interference (ISI).

Based on the same inventive concept, there is also provided a timing advance adjustment apparatus corresponding to the above timing advance adjustment method, a base station and a UE. Since the principle of the base station and the UE to solve the problem is similar to the timing advance adjustment method, the implementations of the base station and the UE can refer to the implementations of the timing advance adjustment method, which will not be repeated herein.

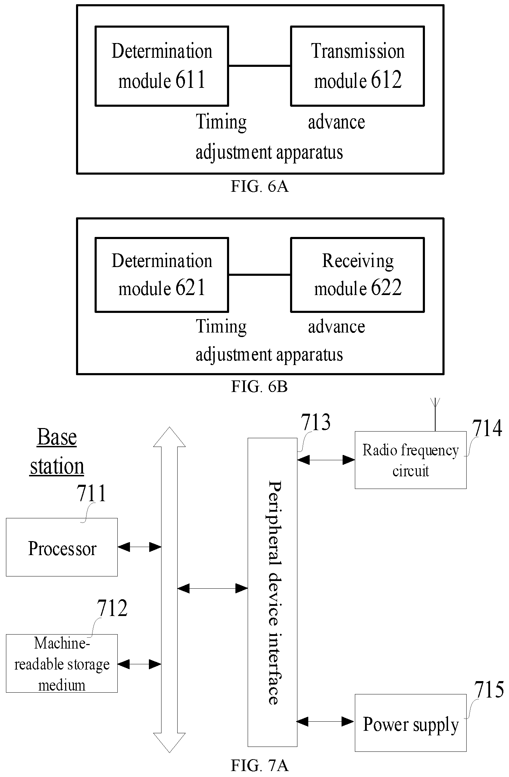

Based on the same application concept as the above method, an example of the present application provides a timing advance adjustment apparatus, which is applied to a UE. See FIG. 6A for the structural diagram of the apparatus. The apparatus includes:
a determination module 611 configured to, if a next slot of K contiguous SBFD slots is a target slot, determine a target timing advance value corresponding to the SBFD slots, where K is a positive integer, and the target timing advance value is a target value, or the target timing advance value is calculated based on a conventional timing advance value; and a transmission module 612 configured to, if the SBFD slots include uplink subbands, based on the target timing advance value corresponding to the SBFD slots, send uplink data to the base station in the uplink subbands of the SBFD slots.

In an example, calculating the target timing advance value based on a conventional timing advance value includes: the target timing advance value being a product of the conventional timing advance value and an adjustment factor, the conventional timing advance value being obtained from a preamble of the UE, and the adjustment factor being a value between 0 and 1.

When the determination module 611 determines the target timing advance value corresponding to the SBFD slots, the determination module 611 is specifically configured to:
receive a timing advance command sent by a base station, and based on the timing advance command, determine the target timing advance value corresponding to the SBFD slots as a target value; or,
receive a timing advance command sent by the base station, and based on the timing advance command, determine that the target timing advance value corresponding to the SBFD slots is a product of the conventional timing advance value and the adjustment factor; or,
receive a first timing advance command and a second timing advance command sent by the base station, determine the adjustment factor corresponding to the SBFD slots based on the first timing advance command, determine the conventional timing advance value corresponding to the SBFD slots based on the second timing advance command, and determine the target timing advance value corresponding to the SBFD slots based on the adjustment factor and the conventional timing advance value; or,
obtain a configured fixed advance value, and based on the fixed advance value, determine the target timing advance value corresponding to the SBFD slots as the target value; or,
obtain a configured fixed adjustment factor, and based on the fixed adjustment factor and the conventional timing advance value corresponding to the SBFD slots, determine the target timing advance value corresponding to the SBFD slots.

As an example, the target slot is an uplink slot, and the apparatus further includes a processing module configured to set contiguous M symbols starting from the last symbol in the last SBFD slot of the K contiguous SBFD slots as invalid symbols, or set contiguous M symbols starting from the first symbol in the uplink slot as invalid symbols; where M is a positive integer.

The transmission module 612 is also configured to prohibit transmitting uplink data to the base station on the invalid symbols if the uplink data occupies the positions of the invalid symbols; or, if the uplink data occupies positions of the invalid symbols and positions of the available symbols, perform rate matching on the uplink data and transmit the matched uplink data to the base station on the available symbols.

As an example, when the processing module sets contiguous M symbols starting from the last symbol in the last SBFD slot of the K contiguous SBFD slots as invalid symbols, or sets contiguous M symbols starting from the first symbol in the uplink slot as invalid symbols, the processing module is specifically configured to:
receive invalid symbol configuration information sent by the base station, or obtain configured fixed invalid symbol configuration information; where the invalid symbol configuration information includes an invalid symbol enable indicator, an invalid symbol position indicator, and an invalid symbol number indicator, or the invalid symbol configuration information includes an invalid symbol position indicator and an invalid symbol number indicator; where the invalid symbol enable indicator is used to indicate whether the invalid symbols are enabled or not; the invalid symbol position indicator is used to indicate that the invalid symbols are located in the SBFD slot or in the uplink slot; the invalid symbol number indicator is used to indicate a number of the invalid symbols;
based on the invalid symbol enable indicator, the invalid symbol position indicator, and the invalid symbol number indicator, set the contiguous M symbols starting from the last symbol in the last SBFD slot as invalid symbols, or set the contiguous M symbols starting from the first symbol in the uplink slot as invalid symbols; or,
based on the invalid symbol position indicator and the invalid symbol number indicator, set the continuous M symbols starting from the last symbol in the last SBFD slot as invalid symbols, or set the continuous M symbols starting from the first symbol in the uplink slot as invalid symbols.

In an example, the target slot is an uplink slot, and the determination module 611 is also configured to determine a reference timing advance value corresponding to the uplink slot; where the reference timing advance value is a target value, or the reference timing advance value is calculated based on a conventional timing advance value, or the reference timing advance value is the same as the target timing advance value.

In an example, calculating the reference timing advance value based on a conventional timing advance value includes: the reference timing advance value being a product of the conventional timing advance value and a reference factor, and the reference factor being a value between 0 and 1.

When the determination module 611 determines the reference timing advance value corresponding to the uplink slot, the determination module 611 is specifically configured to:
receive a timing advance command sent by the base station, and based on the timing advance command, determine the reference timing advance value corresponding to the uplink slot as the target value; or,
receive a timing advance command sent by the base station, and based on the timing advance command, determine that the reference timing advance value corresponding to the uplink slot is a product of the conventional timing advance value and the reference factor; or,
receive a first timing advance command and a second timing advance command sent by the base station, determine the reference factor corresponding to the uplink slot based on the first timing advance command, determine the conventional timing advance value corresponding to the uplink slot based on the second timing advance command, and determine the reference timing advance value corresponding to the uplink slot based on the reference factor and the conventional timing advance value; or,
receive a timing advance follow command sent by the base station. If the timing advance follow command indicates that the reference timing advance value is the same as the target timing advance value, then determine the reference timing advance value corresponding to the uplink slot based on the target timing advance value; or,
obtain a configured fixed advance value, and based on the fixed advance value, determine the reference timing advance value corresponding to the uplink slot as the target value; or,
obtain a configured fixed reference factor, and based on the fixed reference factor and the conventional timing advance value corresponding to the uplink slot, determine the reference timing advance value corresponding to the uplink slot.

In an example, the target slot is an uplink slot, and the transmission module 612 is also configured to, if consecutive uplink data is to be transmitted between the last SBFD slot of the K contiguous SBFD slots and the uplink slot, prohibit sending the last uplink data on the last SBFD slot; or, prohibit sending the first uplink data on the uplink slot.

In an example, the target slot is a mini-slot, and the mini-slot includes both SBFD symbols and non SBFD symbols; where the target timing advance value corresponding to the SBFD symbols is the target value, or the target timing advance value corresponding to the SBFD symbols is calculated based on the conventional timing advance value;
where calculating the target timing advance value corresponding to the SBFD symbols based on the conventional timing advance value includes: the target timing advance value being a product of the conventional timing advance value and the adjustment factor.

In an example, the apparatus further includes a processing module configured to set N contiguous symbols starting from the last symbol of the SBFD symbols as invalid symbols, or set N contiguous symbols starting from the first symbol of the non SBFD symbols as invalid symbols; where N is a positive integer. The transmission module 612 is also configured to prohibit transmitting uplink data to the base station on the invalid symbols if the uplink data occupies positions of the invalid symbols; or,
if the uplink data occupies positions of the invalid symbols and positions of the available symbols, and the available symbols are either SBFD symbols or non SBFD symbols, perform rate matching on the uplink data, and send the matched uplink data to the base station on the available symbols; or,
if the uplink data occupies the positions of the invalid symbols and the available symbols, and the available symbols include both SBFD symbols and non SBFD symbols, perform rate matching on the uplink data and send the matched uplink data to the base station on the available symbols; or, prohibit sending the uplink data to the base station.

As an example, the reference timing advance value corresponding to the non SBFD symbols is a target value, or the reference timing advance value is calculated based on a conventional timing advance value, wherein calculating the reference timing advance value based on a conventional timing advance value, includes: the reference timing advance value being a product of the conventional timing advance value and the reference factor, and the reference factor being a value between 0 and 1, or, the reference timing advance value being the same as the target timing advance value corresponding to the SBFD symbols.

The determination module 611 is also configured to receive a timing advance command sent by the base station, and based on the timing advance command, determine the reference timing advance value corresponding to the non SBFD symbols as the target value; or,
receive a timing advance command sent by the base station, and based on the timing advance command, determine that the reference timing advance value corresponding to the non SBFD symbols being a product of the conventional timing advance value and the reference factor; or,
receive a first timing advance command and a second timing advance command sent by the base station, determine the reference factor corresponding to the non SBFD symbols based on the first timing advance command, determine the conventional timing advance value corresponding to the non SBFD symbols based on the second timing advance command, and determine the reference timing advance value corresponding to the non SBFD symbols based on the reference factor and the conventional timing advance value; or,
receive a timing advance follow command sent by the base station; if the timing advance follow command indicates that the reference timing advance value is the same as the target timing advance value, determine the reference timing advance value corresponding to the non SBFD symbols based on the target timing advance value; or,
obtain a configured fixed advance value, and based on the fixed advance value, determine the reference timing advance value corresponding to the non SBFD symbols as the target value; or,
obtain a configured fixed reference factor, and based on the fixed reference factor and the target timing advance value, determine the reference timing advance value corresponding to the non SBFD symbols.

In an example, the transmission module 612 is also configured to prohibit sending the last uplink data to the base station on the last SBFD symbol if consecutive uplink data is to be transmitted between the last SBFD symbol and the first non SBFD symbol; or, prohibit sending the first uplink data to the base station on the first non SBFD symbol; or,
if uplink data is to be transmitted in the target slot, and the uplink data occupies both the SBFD symbol and the non SBFD symbol, prohibit sending the uplink data to the base station.

In an example, the determination module 611 is also configured to receive an enable indicator sent by the base station, which is a first value or a second value; if the enable indicator is the first value, determine the target timing advance value corresponding to the SBFD slots as the target value, or calculate the target timing advance value based on the conventional timing advance value; if the enable indicator is the second value, determine that the target timing advance value corresponding to the SBFD slots is the conventional timing advance value.

Based on the same application concept as the above method, an example of the present application provides a timing advance adjustment apparatus, which is applied to a base station. See FIG. 6B for a structural diagram of the apparatus. The apparatus includes:
a determination module 621 configured to, if a next slot of K contiguous SBFD slots is a target slot, determine a target timing advance value corresponding to the SBFD slots; where K is a positive integer, and the target timing advance value is a target value, or the target timing advance value is calculated based on a conventional timing advance value; and a receiving module 622 configured to, if the SBFD slots include uplink subbands, receive uplink data sent by a UE in the uplink subbands of the SBFD slots based on the target timing advance value corresponding to the SBFD slots.

In an example, calculating the target timing advance value based on a conventional timing advance value, includes: the target timing advance value being a product of the conventional timing advance value and an adjustment factor, the conventional timing advance value being obtained from a preamble of the UE, and the adjustment factor being a value between 0 and 1.

The apparatus further includes a transmission module configured to, if the target timing advance value is a target value, send a timing advance command to the UE, the timing advance command being used to cause the UE to determine that the target timing advance value corresponding to the SBFD slots is a target value; or,
if the target timing advance value is a product of a conventional timing advance value and an adjustment factor, send a timing advance command to the UE, the timing advance command being used to cause the UE to determine that the target timing advance value corresponding to the SBFD slots is a product of a conventional timing advance value and an adjustment factor; or,
if the target timing advance value is a product of a conventional timing advance value and an adjustment factor, send a first timing advance command and a second timing advance command to the UE, the first timing advance command being used to cause the UE to determine the adjustment factor corresponding to the SBFD slots, and the second timing advance command being used to cause the UE to determine the conventional timing advance value corresponding to the SBFD slots.

In an example, the target slot is an uplink slot, and the apparatus further includes:
a processing module configured to set contiguous M symbols starting from a last symbol in a last SBFD slot of the K contiguous SBFD slots as invalid symbols, or set contiguous M symbols starting from a first symbol in the uplink slot as invalid symbols; where M is a positive integer;
the transmission module further configured to send invalid symbol configuration information to the UE, the invalid symbol configuration information including an invalid symbol enable indicator, an invalid symbol position indicator, and an invalid symbol number indicator; or, the invalid symbol configuration information including an invalid symbol position indicator and an invalid symbol number indicator; wherein the invalid symbols enable indicator is used to indicate whether the invalid symbols are enabled or not; the invalid symbol position indicator is used to indicate that the invalid symbols are located in the SBFD slot or in the uplink slot; the invalid symbol number indicator is used to indicate a number of the invalid symbols.

In an example, the target slot is an uplink slot, and the determination module 621 is also configured to determine a reference timing advance value corresponding to the uplink slot; wherein the reference timing advance value is a target value, or the reference timing advance value is calculated based on a conventional timing advance value, or the reference timing advance value is the same as the target timing advance value.

In an example, calculating the reference timing advance value based on a conventional timing advance value, includes: the reference timing advance value being a product of the conventional timing advance value and a reference factor, and the reference factor being a value between 0 and 1.

The transmission module is also configured to if the reference timing advance value is a target value, send a timing advance command to the UE, the timing advance command being used to cause the UE to determine that the reference timing advance value corresponding to the uplink slot is a target value; or,
if the reference timing advance value is a product of the conventional timing advance value and a reference factor, send a timing advance command to the UE, the timing advance command being used to cause the UE to determine that the reference timing advance value corresponding to the uplink slot is a product of the conventional timing advance value and a reference factor; or,
if the reference timing advance value is a product of the conventional timing advance value and the reference factor, send a first timing advance command and a second timing advance command to the UE, the first timing advance command being used to cause the UE to determine the reference factor corresponding to the uplink slot, and the second timing advance command being used to cause the UE to determine the conventional timing advance value corresponding to the uplink slot; or,
if the reference timing advance value is the same as the target timing advance value, send a timing advance follow command to the UE, the timing advance follow command being used to cause the UE to determine whether the reference timing advance value corresponding to the uplink slot is the same as the target timing advance value corresponding to the SBFD slots.

In an example, the target slot is a mini-slot, and the mini-slot includes both SBFD symbols and non SBFD symbols; where the target timing advance value corresponding to the SBFD symbols is a target value, or the target timing advance value corresponding to the SBFD symbols is calculated based on a conventional timing advance value;
where calculating the target timing advance value corresponding to the SBFD symbols based on a conventional timing advance value, includes: the target timing advance value being a product of the conventional timing advance value and the adjustment factor.

In an example, the apparatus further includes a processing module configured to set contiguous N symbols starting from a last symbol of the SBFD symbols as invalid symbols, or set contiguous N symbols starting from a first symbol of the non SBFD symbols as invalid symbols; where N is a positive integer; the transmission module further configured to send invalid symbol configuration information to the UE, wherein the invalid symbol configuration information includes an invalid symbol enable indicator, an invalid symbol position indicator, and an invalid symbol number indicator; or, the invalid symbol configuration information includes an invalid symbol position indicator and an invalid symbol number indicator;
wherein the invalid symbol enable indicator is used to indicate whether to the invalid symbols are enabled or not; the invalid symbol position indicator is used to indicate whether the invalid symbols are located in the SBFD symbols or in the non SBFD symbols; the invalid symbol number indicator is used to indicate a number of the invalid symbols.

As an example, the reference timing advance value corresponding to the non SBFD symbol is a target value, or the reference timing advance value is calculated based on a conventional timing advance value, wherein calculating the reference timing advance value based on a conventional timing advance value, includes: the reference timing advance value being a product of the conventional timing advance value and the reference factor, and the reference factor being a value between 0 and 1, or the reference timing advance value being the same as the target timing advance value corresponding to the SBFD symbols;
the transmission module further configured to, if the reference timing advance value is a target value, send a timing advance command to the UE, the timing advance command being used to cause the UE to determine that the reference timing advance value corresponding to the non SBFD symbols is a target value; or,
if the reference timing advance value is a product of the conventional timing advance value and the reference factor, send a timing advance command to the UE, the timing advance command being used to cause the UE to determine that the reference timing advance value corresponding to the non SBFD symbols is a product of the conventional timing advance value and the reference factor; or,
if the reference timing advance value is a product of the conventional timing advance value and the reference factor, send a first timing advance command and a second timing advance command to the UE, the first timing advance command being used to cause the UE to determine the reference factor corresponding to the non SBFD symbols, and the second timing advance command being used to cause the UE to determine the conventional timing advance value corresponding to the non SBFD symbols; or,
if the reference timing advance value is the same as the target timing advance value, send a timing advance follow command to the UE, the timing advance follow command being used to determine whether the reference timing advance value corresponding to the non SBFD symbols is the same as the target timing advance value corresponding to the SBFD symbols.

In an example, the transmission module is configured to send an enable indicator to the UE, the enable indicator being a first or second value; wherein the first value is used to indicate that the UE determines that the target timing advance value corresponding to the SBFD slots is a target value, or that the target timing advance value is calculated based on a conventional timing advance value; the second value is used to indicate that the UE determines that the target timing advance value corresponding to the SBFD slots is the conventional timing advance value.

Based on the same application concept as the above method, a base station is provided in an example of this application, as shown in FIG. 7A. The base station can include a processor 711 and a machine-readable storage medium 712, storing machine executable instructions that can be executed by the processor 711. The processor 711 is used to execute machine executable instructions to implement the timing advance adjustment method disclosed in the above examples of the present application.

In an example, the processor 711 may include one or more processing cores, such as 4-core processors, 8-core processors, etc. The processor 711 can be implemented in at least one hardware form of DSP (Digital Signal Processing), FPGA (Field Programmable Gate Array), or PLA (Programmable Logic Array). The processor 711 can also include a main processor and a coprocessor. The main processor is a processor used to process data in a wake-up state, also known as a Central Processing Unit (CPU). A coprocessor is a low-power processor used to process data in standby mode. In some embodiments, the processor 711 may be integrated with a GPU (Graphics Processing Unit) responsible for rendering and drawing the content required for display on the display screen.

In an example, the base station may also include: a peripheral device interface 713 and at least one peripheral device. The processor 711 and the peripheral device interface 713 can be connected through a bus or a signal line. Each peripheral device can be connected to the peripheral device interface 713 through a bus, a signal line, or a circuit board. The peripheral device can include at least one of a radio frequency circuit 714 and a power supply 715.

The RF circuit 714 is used to receive and transmit RF (Radio Frequency) signals, also known as electromagnetic signals. The RF circuit 714 communicates with communication networks and other communication devices through electromagnetic signals. The RF circuit 714 converts electrical signals into electromagnetic signals for transmission, or converts received electromagnetic signals into electrical signals. Optionally, the RF circuit 714 includes an antenna system, a RF transceiver, one or more amplifiers, a tuner, an oscillator, a digital signal processor, a user identity module card, and the like. The RF circuit 714 can communicate with user equipment through at least one wireless communication protocol. This wireless communication protocol includes but is not limited to: the World Wide Web, a metropolitan area network, an intranet, various generations of mobile communication networks (2G, 3G, 4G, and 5G), a wireless local area network, and/or a WiFi (Wireless Fidelity) network.

The power supply 715 is used to power various components in the base station, and can be AC, DC, disposable battery, or rechargeable battery.

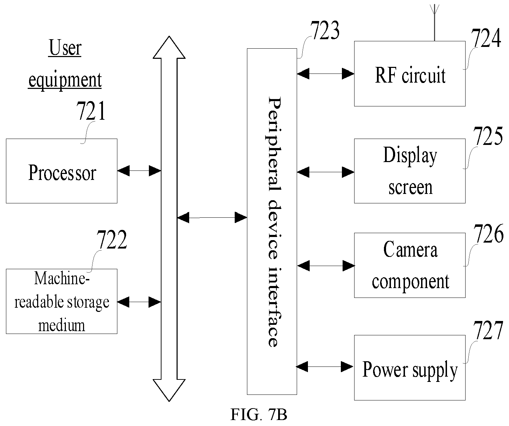

Based on the same application concept as the above method, in an example of this application, a user equipment is provided, as shown in FIG. 7B. The user equipment can include a processor 721 and a machine-readable storage medium 722 storing machine executable instructions that can be executed by the processor 721. The processor 721 is used to execute machine executable instructions to implement the timing advance adjustment method disclosed in the above examples of the present application.

In an example, the processor 721 may include one or more processing cores, such as a 4-core processor, an 8-core processor, etc. The processor 721 can be implemented in at least one hardware form of DSP, FPGA, or PLA. The processor 721 can also include a main processor and a coprocessor.

In an example, the user equipment also includes: a peripheral device interface 723 and at least one peripheral device. The processor 721 and the peripheral device interface 723 can be connected through a bus or a signal line. Each peripheral device can be connected to the peripheral device interface 723 through a bus, a signal line, or a circuit board. The peripheral devices can include at least one of: an RF circuit 724, a touch screen display screen 725, a camera 726, and a power supply 727.

The RF circuit 724 is used to receive and transmit RF signals, also known as electromagnetic signals. The RF circuit 724 communicates with communication networks and other communication devices through electromagnetic signals. The RF circuit 724 converts electrical signals into electromagnetic signals for transmission, or converts received electromagnetic signals into electrical signals. Optionally, the RF circuit 724 includes an antenna system, a RF transceiver, one or more amplifiers, a tuner, an oscillator, a digital signal processor, a user identity module card, and the like. The RF circuit 724 can communicate with the base station through at least one wireless communication protocol. This wireless communication protocol includes but is not limited to: the World Wide Web, a metropolitan area network, an intranet, various generations of mobile communication networks, a wireless local area network, and/or WiFi.

A display screen 725 is used to display the UI (User Interface). The UI can include graphics, text, icons, videos, and any combination thereof. When the display screen 725 is a touch screen display, the display screen 725 also has the capability to collect touch signals on or above the surface of the display screen 725. The touch signal can be input as a control signal to the processor 721 for processing. At this point, the display screen 725 can also be used to provide virtual buttons and/or virtual keyboards, also known as soft buttons and/or soft keyboards.

In some embodiments, the display screen 725 can be one, located on the front panel of the user equipment. In other embodiments, the display screen 725 can be at least two, respectively arranged on different surfaces of the user equipment or in a folded form. In further embodiments, the display screen 725 can be a flexible display screen set on a curved or folded surface of the user equipment. Even, the display screen 725 can be set as a non rectangular irregular shape, also known as an irregular screen. The display screen 725 can be prepared using materials such as LCD (Liquid Crystal Display) and OLED (Organic Light Emitting Diode).

A camera component 726 is used to capture images or videos. Optionally, the camera component 726 includes a front facing camera and a rear facing camera. Usually, the front camera is set on the front panel of the user equipment, and the rear camera is set on the back of the user equipment. In some embodiments, there are at least two rear mounted cameras, either the main camera, a depth of field camera, a wide-angle camera, or a telephoto camera, to achieve background virtualization through the fusion of the main camera and the depth of field camera, panoramic shooting through the fusion of the main camera and the wide-angle camera, and VR (Virtual Reality) shooting or other fusion shooting functions. In some embodiments, the camera component 726 may also include a flash. The flash can be either monochrome or dual color. The dual color temperature flash refers to a combination of warm light flash and cold light flash, which can be used for light compensation at different color temperatures.

A power supply 727 is used to supply power to various components in user equipment. The power supply 727 can be AC, DC, disposable battery, or rechargeable battery. When the power supply 727 includes a rechargeable battery, and the rechargeable battery can be a wired charging battery or a wireless charging battery.

Based on the same application concept as the above method, an example of the present application also provides a machine-readable storage medium on which a number of computer instructions are stored. When the computer instructions are executed by a processor, the timing advance adjustment method disclosed in the above example of the present application can be realized.

Here, the above-mentioned machine-readable storage medium can be any electronic, magnetic, optical or other physical storage device, which can contain or store information, such as executable instructions, data, and so on. For example, machine readable storage media can be: an RAM (Random Access Memory), a volatile memory, a non volatile memory, a flash memory, a storage drive (such as a hard drive), a solid-state drive, any type of storage disk (such as optical disks, DVDs, etc.), or similar storage media, or a combination thereof.

The system, device, module or unit illustrated in the above embodiments can be implemented by a computer entity or by a product with a certain function. A typical implementation device is a computer, which can take the form of a personal computer, laptop, cellular phone, camera phone, smart phone, personal digital assistant, media player, navigation device, email sending and receiving device, game console, tablet computer, wearable device, or any combination of these devices.

The above is only an embodiment of this application and is not intended to limit it. For technical personnel in this field, there may be various changes and variations in this application. Any modifications, equivalent substitutions, improvements, etc. made within the spirit and principles of this application shall be included within the scope of the claims of this application.

## Claims

1. A timing advance adjustment method, applied to a UE, and the method comprising:
if a next slot of K contiguous SBFD slots is a target slot, determining a target timing advance value corresponding to the SBFD slots; where K is a positive integer, and the target timing advance value is a target value, or the target timing advance value is calculated based on a conventional timing advance value;
if the SBFD slots comprise uplink subbands, based on the target timing advance value corresponding to the SBFD slots, sending uplink data to a base station in the uplink subbands of the SBFD slots.

2. The method according to claim 1, wherein calculating the target timing advance value based on a conventional timing advance value comprises: the target timing advance value being a product of a conventional timing advance value and an adjustment factor, wherein the conventional timing advance value is obtained from a preamble of the UE, the adjustment factor is a value between 0 and 1; and determining the target timing advance value corresponding to the SBFD slots comprises:
receiving a timing advance command sent by the base station, and based on the timing advance command, determining the target timing advance value corresponding to the SBFD slots as the target value; or,
receiving a timing advance command sent by the base station, and based on the timing advance command, determining that the target timing advance value corresponding to the SBFD slots is a product of the conventional timing advance value and the adjustment factor; or,
receiving a first timing advance command and a second timing advance command sent by the base station, determining the adjustment factor corresponding to the SBFD slots based on the first timing advance command, determining the conventional timing advance value corresponding to the SBFD slots based on the second timing advance command, and determining the target timing advance value corresponding to the SBFD slots based on the adjustment factor and the conventional timing advance value; or,
obtaining a configured fixed advance value and based on the fixed advance value, determining the target timing advance value corresponding to the SBFD slots as the target value; or,
obtaining a configured fixed adjustment factor and based on the fixed adjustment factor and the conventional timing advance value corresponding to the SBFD slots, determining the target timing advance value corresponding to the SBFD slots.

3. The method according to claim 1, wherein the target slot is an uplink slot, and after determining the target timing advance value corresponding to the SBFD slots, the method further comprises:
setting contiguous M symbols starting from a last symbol in a last SBFD slot of the K contiguous SBFD slots as invalid symbols, or setting contiguous M symbols starting from a first symbol in the uplink slot as invalid symbols; where M is a positive integer;
if uplink data occupies positions of the invalid symbols, prohibiting sending the uplink data to the base station on the invalid symbols; or, if the uplink data occupies the positions of the invalid symbols and positions of available symbols, performing rate matching on the uplink data and sending the matched uplink data to the base station on the available symbols.

4. The method according to claim 3, wherein
setting contiguous M symbols starting from a last symbol in a last SBFD slot of the K contiguous SBFD slots as invalid symbols, or setting contiguous M symbols starting from a first symbol in the uplink slot as invalid symbols, comprising:
receiving invalid symbol configuration information sent by the base station, or obtaining configured fixed invalid symbol configuration information; wherein the invalid symbol configuration information comprises an invalid symbol enable indicator, an invalid symbol position indicator, and an invalid symbol number indicator, or the invalid symbol configuration information comprises an invalid symbol position indicator and an invalid symbol number indicator; wherein the invalid symbols enable indicator is used to indicate whether the invalid symbols are enabled or not; the invalid symbol position indicator is used to indicate whether the invalid symbols are located in the SBFD slot or in the uplink slot; the invalid symbol number indicator is used to indicate a number of the invalid symbols;
based on the invalid symbol enable indicator, the invalid symbol position indicator, and the invalid symbol number indicator, setting the contiguous M symbols starting from the last symbol in the last SBFD slot as invalid symbols, or setting the contiguous M symbols starting from the first symbol in the uplink slot as invalid symbols; or,
based on the invalid symbol position indicator and the invalid symbol number indicator, setting the contiguous M symbols starting from the last symbol in the last SBFD slot as invalid symbols, or setting the contiguous M symbols starting from the first symbol in the uplink slot as invalid symbols.

5. The method according to claim 1, wherein the target slot is an uplink slot, and after determining the target timing advance value corresponding to the SBFD slots, the method further comprises:
determining a reference timing advance value corresponding to the uplink slot; wherein the reference timing advance value is a target value, or the reference timing advance value is calculated based on a conventional timing advance value, or the reference timing advance value is the same as the target timing advance value.

6. The method according to claim 5, wherein calculating the reference timing advance value based on a conventional timing advance value, comprises: the reference timing advance value being a product of the conventional timing advance value and a reference factor, and the reference factor is a value between 0 and 1;
determining a reference timing advance value corresponding to the uplink slot comprises:
receiving a timing advance command sent by the base station, and based on the timing advance command, determining the reference timing advance value corresponding to the uplink slot as the target value; or,
receiving a timing advance command sent by the base station, and based on the timing advance command, determining that the reference timing advance value corresponding to the uplink slot is a product of the conventional timing advance value and the reference factor; or,
receiving a first timing advance command and a second timing advance command sent by the base station, determining the reference factor corresponding to the uplink slot based on the first timing advance command, determining the conventional timing advance value corresponding to the uplink slot based on the second timing advance command, and determining the reference timing advance value corresponding to the uplink slot based on the reference factor and the conventional timing advance value; or,
receiving a timing advance follow command sent by the base station. if the timing advance follow command indicates that the reference timing advance value is the same as the target timing advance value, determining the reference timing advance value corresponding to the uplink slot based on the target timing advance value; or,
obtaining a configured fixed advance value and determining the reference timing advance value corresponding to the uplink slot as the target value based on the fixed advance value; or,
obtaining a configured fixed reference factor and determining the reference timing advance value corresponding to the uplink slot based on the fixed reference factor and the conventional timing advance value corresponding to the uplink slot.

7. The method according to claim 1, wherein the target slot is an uplink slot, and after determining the target timing advance value corresponding to the SBFD slots, the method further comprises:
if consecutive uplink data is to be transmitted between a last SBFD slot of the K contiguous SBFD slots and the uplink slot, prohibiting sending last uplink data on the last SBFD slot; or, prohibiting sending first uplink data on the uplink slot.

8. The method according to any one of claims 1-7, wherein the target slot is a mini-slot, and the mini-slot comprises both SBFD symbols and non SBFD symbols;
wherein a target timing advance value corresponding to the SBFD symbols is a target value, or the target timing advance value corresponding to the SBFD symbols is calculated based on a conventional timing advance value;
wherein calculating the target timing advance value corresponding to the SBFD symbols based on a conventional timing advance value, comprises: the target timing advance value being a product of the conventional timing advance value and the adjustment factor.

9. The method according to claim 8, wherein the method further comprises:
setting contiguous N symbols starting from a last symbol of the SBFD symbols as invalid symbols, or setting contiguous N symbols starting from a first symbol of the non SBFD symbols as invalid symbols; where N is a positive integer;
if uplink data occupies positions of the invalid symbols, prohibiting sending the uplink data to the base station on the invalid symbols; or,
if uplink data occupies positions of the invalid symbols and positions of available symbols, and the available symbols are either SBFD symbols or non SBFD symbols, performing rate matching on the uplink data, and sending the matched uplink data to the base station on the available symbols; or,
if uplink data occupies positions of the invalid symbols and positions of the available symbols, and the available symbols comprises both SBFD symbols and non SBFD symbols, performing rate matching on the uplink data, and sending the matched uplink data to the base station on the available symbols; or, prohibiting sending the uplink data to the base station.

10. The method according to claim 8, wherein the reference timing advance value corresponding to the non SBFD symbols is a target value, or the reference timing advance value is calculated based on a conventional timing advance value, wherein calculating the reference timing advance value based on a conventional timing advance value, comprises: the reference timing advance value being a product of the conventional timing advance value and a reference factor, and the reference factor being a value between 0 and 1, or the reference timing advance value is the same as the target timing advance value corresponding to the SBFD symbols; the method further comprises:
receiving a timing advance command sent by the base station, and based on the timing advance command, determining the reference timing advance value corresponding to the non SBFD symbols as the target value; or,
receiving a timing advance command sent by the base station, and based on the timing advance command, determining that the reference timing advance value corresponding to the non SBFD symbols is a product of the conventional timing advance value and the reference factor; or,
receiving a first timing advance command and a second timing advance command sent by the base station, determining the reference factor corresponding to the non SBFD symbols based on the first timing advance command, determining the conventional timing advance value corresponding to the non SBFD symbols based on the second timing advance command, and determining the reference timing advance value corresponding to the non SBFD symbols based on the reference factor and the conventional timing advance value; or,
receiving a timing advance follow command sent by the base station, if the timing advance follow command indicates that the reference timing advance value is the same as the target timing advance value, determining the reference timing advance value corresponding to the non SBFD symbols based on the target timing advance value; or,
obtaining a configured fixed advance value and based on the fixed advance value, determining the reference timing advance value corresponding to the non SBFD symbols as the target value; or,
obtaining a configured fixed reference factor and based on the fixed reference factor and the target timing advance value, determining the reference timing advance value corresponding to the non SBFD symbols.

11. The method according to claim 8, wherein the method further comprises:
if consecutive uplink data is to be transmitted between a last SBFD symbol and a first non SBFD symbol, prohibiting sending last uplink data to the base station on the last SBFD symbol; or, prohibiting sending first uplink data to the base station on the first non SBFD symbol; or,
if uplink data is to be transmitted in the target slot, and the uplink data occupies both an SBFD symbol and a non SBFD symbol, prohibiting sending the uplink data to the base station.

12. The method according to any one of claims 1-7, wherein the method further comprises:
receiving an enable indicator sent by the base station, the enable indicator being a first value or a second value;
if the enable indicator is the first value, determining the target timing advance value corresponding to the SBFD slots as the target value, or calculating the target timing advance value based on the conventional timing advance value;
if the enable indicator is the second value, determining that the target timing advance value corresponding to the SBFD slots is the conventional timing advance value.

13. A timing advance adjustment method, applied to a base station, and the method comprising:
if a next slot of K contiguous SBFD slots is a target slot, determining a target timing advance value corresponding to the SBFD slots; where K is a positive integer, and the target timing advance value is a target value, or the target timing advance value is calculated based on a conventional timing advance value;
if the SBFD slots comprise uplink subbands, receiving uplink data sent by a UE in the uplink subbands of the SBFD slots based on the target timing advance value corresponding to the SBFD slots.

14. The method according to claim 13, wherein calculating the target timing advance value based on a conventional timing advance value, comprises: the target timing advance value being a product of the conventional timing advance value and an adjustment factor, the conventional timing advance value being obtained from a preamble of the UE, and the adjustment factor being a value between 0 and 1; and after determining the target timing advance value corresponding to the SBFD slots, the method further comprises:
if the target timing advance value is a target value, sending a timing advance command to the UE, the timing advance command being used to cause the UE to determine that the target timing advance value corresponding to the SBFD slots is a target value; or,
if the target timing advance value is a product of a conventional timing advance value and an adjustment factor, sending a timing advance command to the UE, the timing advance command being used to cause the UE to determine that the target timing advance value corresponding to the SBFD slots is a product of a conventional timing advance value and an adjustment factor; or,
if the target timing advance value is a product of a conventional timing advance value and an adjustment factor, sending a first timing advance command and a second timing advance command to the UE, the first timing advance command being used to cause the UE to determine the adjustment factor corresponding to the SBFD slots, and the second timing advance command being used to cause the UE to determine the conventional timing advance value corresponding to the SBFD slots.

15. The method according to claim 13, wherein the target slot is an uplink slot, and after determining the target timing advance value corresponding to the SBFD slots, the method further comprises:
setting contiguous M symbols starting from a last symbol in a last SBFD slot of the K contiguous SBFD slots as invalid symbols, or setting contiguous M symbols starting from a first symbol in the uplink slot as invalid symbols; where M is a positive integer;
sending invalid symbol configuration information to the UE, the invalid symbol configuration information comprising an invalid symbol enable indicator, an invalid symbol position indicator, and an invalid symbol number indicator; or, the invalid symbol configuration information comprising an invalid symbol position indicator and an invalid symbol number indicator; wherein the invalid symbols enable indicator is used to indicate whether the invalid symbols are enabled or not; the invalid symbol position indicator is used to indicate that the invalid symbols are located in the SBFD slot or in the uplink slot; the invalid symbol number indicator is used to indicate a number of the invalid symbols.

16. The method according to claim 13, wherein the target slot is an uplink slot, and after determining the target timing advance value corresponding to the SBFD slots, the method further comprises:
determining a reference timing advance value corresponding to the uplink slot; wherein the reference timing advance value is a target value, or the reference timing advance value is calculated based on a conventional timing advance value, or the reference timing advance value is the same as the target timing advance value.

17. The method according to claim 16, wherein calculating the reference timing advance value based on a conventional timing advance value, comprises: the reference timing advance value being a product of the conventional timing advance value and a reference factor, and the reference factor being a value between 0 and 1; after determining the reference timing advance value corresponding to the uplink slot, the method further comprises:
if the reference timing advance value is a target value, sending a timing advance command to the UE, the timing advance command being used to cause the UE to determine that the reference timing advance value corresponding to the uplink slot is a target value; or,
if the reference timing advance value is a product of the conventional timing advance value and a reference factor, sending a timing advance command to the UE, the timing advance command being used to cause the UE to determine that the reference timing advance value corresponding to the uplink slot is a product of the conventional timing advance value and a reference factor; or,
if the reference timing advance value is a product of the conventional timing advance value and the reference factor, sending a first timing advance command and a second timing advance command to the UE, the first timing advance command being used to cause the UE to determine the reference factor corresponding to the uplink slot, and the second timing advance command being used to cause the UE to determine the conventional timing advance value corresponding to the uplink slot; or,
if the reference timing advance value is the same as the target timing advance value, sending a timing advance follow command to the UE, the timing advance follow command being used to cause the UE to determine whether the reference timing advance value corresponding to the uplink slot is the same as the target timing advance value corresponding to the SBFD slots.

18. The method according to any one of claims 13-17, wherein the target slot is a mini-slot, and the mini-slot comprises both SBFD symbols and non SBFD symbols;
wherein the target timing advance value corresponding to the SBFD symbols is a target value, or the target timing advance value corresponding to the SBFD symbols is calculated based on a conventional timing advance value;
wherein calculating the target timing advance value corresponding to the SBFD symbols based on a conventional timing advance value, comprises: the target timing advance value being a product of the conventional timing advance value and the adjustment factor.

19. The method according to claim 18, wherein the method further comprises:
setting contiguous N symbols starting from a last symbol of the SBFD symbols as invalid symbols, or setting contiguous N symbols starting from a first symbol of the non SBFD symbols as invalid symbols; where N is a positive integer;
sending invalid symbol configuration information to the UE, wherein the invalid symbol configuration information comprises an invalid symbol enable indicator, an invalid symbol position indicator, and an invalid symbol number indicator; or, the invalid symbol configuration information comprises an invalid symbol position indicator and an invalid symbol number indicator; wherein the invalid symbol enable indicator is used to indicate whether to the invalid symbols are enabled or not; the invalid symbol position indicator is used to indicate whether the invalid symbols are located in the SBFD symbols or in the non SBFD symbols; the invalid symbol number indicator is used to indicate a number of the invalid symbols.

20. The method according to claim 18, wherein the reference timing advance value corresponding to the non SBFD symbols is a target value, or the reference timing advance value is calculated based on a conventional timing advance value, wherein calculating the reference timing advance value based on a conventional timing advance value, comprises: the reference timing advance value being a product of the conventional timing advance value and the reference factor, and the reference factor being a value between 0 and 1, or the reference timing advance value being the same as the target timing advance value corresponding to the SBFD symbols; the method further comprises:
if the reference timing advance value is a target value, sending a timing advance command to the UE, the timing advance command being used to cause the UE to determine that the reference timing advance value corresponding to the non SBFD symbols is a target value; or,
if the reference timing advance value is a product of the conventional timing advance value and the reference factor, sending a timing advance command to the UE, the timing advance command being used to cause the UE to determine that the reference timing advance value corresponding to the non SBFD symbols is a product of the conventional timing advance value and the reference factor; or,
if the reference timing advance value is a product of the conventional timing advance value and the reference factor, sending a first timing advance command and a second timing advance command to the UE, the first timing advance command being used to cause the UE to determine the reference factor corresponding to the non SBFD symbols, and the second timing advance command being used to cause the UE to determine the conventional timing advance value corresponding to the non SBFD symbols; or,
if the reference timing advance value is the same as the target timing advance value, sending a timing advance follow command to the UE, the timing advance follow command being used to determine whether the reference timing advance value corresponding to the non SBFD symbols is the same as the target timing advance value corresponding to the SBFD symbols.

21. The method according to any one of claims 13-17, wherein the method further comprises:
sending an enable indicator to the UE, the enable indicator being a first or second value;
wherein the first value is used to indicate that the UE determines that the target timing advance value corresponding to the SBFD slots is a target value, or that the target timing advance value is calculated based on a conventional timing advance value;
the second value is used to indicate that the UE determines that the target timing advance value corresponding to the SBFD slots is the conventional timing advance value.

22. A timing advance adjustment apparatus, applied to a UE, and the apparatus comprising:
a determination module configured to, if a next slot of K contiguous SBFD slots is a target slot, determine a target timing advance value corresponding to the SBFD slots; where K is a positive integer, and the target timing advance value is a target value, or the target timing advance value is calculated based on a conventional timing advance value;
a transmission module configured to, if the SBFD slots comprise uplink subbands, based on the target timing advance value corresponding to the SBFD slots, send uplink data to a base station in the uplink subbands of the SBFD slots.

23. The apparatus according to claim 22, wherein
calculating the target timing advance value based on a conventional timing advance value comprises: the target timing advance value being a product of a conventional timing advance value and an adjustment factor, wherein the conventional timing advance value is obtained from a preamble of the UE, the adjustment factor is a value between 0 and 1; and
the determination module, when determining the target timing advance value corresponding to the SBFD slots, is further configured to:
receive a timing advance command sent by the base station, and based on the timing advance command, determine the target timing advance value corresponding to the SBFD slots as the target value; or,
receive a timing advance command sent by the base station, and based on the timing advance command, determine that the target timing advance value corresponding to the SBFD slots is a product of the conventional timing advance value and the adjustment factor; or,
receive a first timing advance command and a second timing advance command sent by the base station, determine the adjustment factor corresponding to the SBFD slots based on the first timing advance command, determine the conventional timing advance value corresponding to the SBFD slots based on the second timing advance command, and determine the target timing advance value corresponding to the SBFD slots based on the adjustment factor and the conventional timing advance value; or,
obtain a configured fixed advance value and based on the fixed advance value, determine the target timing advance value corresponding to the SBFD slots as the target value; or,
obtain a configured fixed adjustment factor and based on the fixed adjustment factor and the conventional timing advance value corresponding to the SBFD slots, determine the target timing advance value corresponding to the SBFD slots.

24. The apparatus according to claim 22, wherein
the target slot is an uplink slot, and the apparatus further comprises:
a processing module configured to set contiguous M symbols starting from a last symbol in a last SBFD slot of the K contiguous SBFD slots as invalid symbols, or set contiguous M symbols starting from a first symbol in the uplink slot as invalid symbols; where M is a positive integer;
the transmission module further configured to, if uplink data occupies positions of the invalid symbols, prohibit sending the uplink data to the base station on the invalid symbols; or, if the uplink data occupies the positions of the invalid symbols and positions of available symbols, perform rate matching on the uplink data and send the matched uplink data to the base station on the available symbols.

25. The apparatus according to claim 24, wherein
the processing module, when setting contiguous M symbols starting from a last symbol in a last SBFD slot of the K contiguous SBFD slots as invalid symbols, or setting contiguous M symbols starting from a first symbol in the uplink slot as invalid symbols, is further configured to:
receive invalid symbol configuration information sent by the base station, or obtain configured fixed invalid symbol configuration information; wherein the invalid symbol configuration information comprises an invalid symbol enable indicator, an invalid symbol position indicator, and an invalid symbol number indicator, or the invalid symbol configuration information comprises an invalid symbol position indicator and an invalid symbol number indicator; wherein the invalid symbols enable indicator is used to indicate whether the invalid symbols are enabled or not; the invalid symbol position indicator is used to indicate whether the invalid symbols are located in the SBFD slot or in the uplink slot; the invalid symbol number indicator is used to indicate a number of the invalid symbols;
based on the invalid symbol enable indicator, the invalid symbol position indicator, and the invalid symbol number indicator, set the contiguous M symbols starting from the last symbol in the last SBFD slot as invalid symbols, or set the contiguous M symbols starting from the first symbol in the uplink slot as invalid symbols; or,
based on the invalid symbol position indicator and the invalid symbol number indicator, set the contiguous M symbols starting from the last symbol in the last SBFD slot as invalid symbols, or set the contiguous M symbols starting from the first symbol in the uplink slot as invalid symbols.

26. The apparatus according to claim 22, wherein the target slot is an uplink slot, and the determination module is further configured to determine a reference timing advance value corresponding to the uplink slot; wherein the reference timing advance value is a target value, or the reference timing advance value is calculated based on a conventional timing advance value, or the reference timing advance value is the same as the target timing advance value.

27. The apparatus according to claim 26, wherein calculating the reference timing advance value based on a conventional timing advance value, comprises: the reference timing advance value being a product of the conventional timing advance value and a reference factor, and the reference factor is a value between 0 and 1;
the determination module, when determining a reference timing advance value corresponding to the uplink slot, is further configured to:
receive a timing advance command sent by the base station, and based on the timing advance command, determine the reference timing advance value corresponding to the uplink slot as the target value; or,
receive a timing advance command sent by the base station, and based on the timing advance command, determine that the reference timing advance value corresponding to the uplink slot is a product of the conventional timing advance value and the reference factor; or,
receive a first timing advance command and a second timing advance command sent by the base station, determine the reference factor corresponding to the uplink slot based on the first timing advance command, determine the conventional timing advance value corresponding to the uplink slot based on the second timing advance command, and determine the reference timing advance value corresponding to the uplink slot based on the reference factor and the conventional timing advance value; or,
receive a timing advance follow command sent by the base station. if the timing advance follow command indicates that the reference timing advance value is the same as the target timing advance value, determine the reference timing advance value corresponding to the uplink slot based on the target timing advance value; or,
obtain a configured fixed advance value and based on the fixed advance value, determine the reference timing advance value corresponding to the uplink slot as the target value; or,
obtain a configured fixed reference factor and based on the fixed reference factor and the conventional timing advance value corresponding to the uplink slot, determine the reference timing advance value corresponding to the uplink slot.

28. The apparatus according to claim 22, wherein the target slot is an uplink slot, and the transmission module is further configured to, if consecutive uplink data is to be transmitted between a last SBFD slot of the K contiguous SBFD slots and the uplink slot, prohibit sending last uplink data on the last SBFD slot; or, prohibit sending first uplink data on the uplink slot.

29. The apparatus according to any one of claims 22-28, wherein the target slot is a mini-slot, and the mini-slot comprises both SBFD symbols and non SBFD symbols;
wherein a target timing advance value corresponding to the SBFD symbols is a target value, or the target timing advance value corresponding to the SBFD symbols is calculated based on a conventional timing advance value;
wherein calculating the target timing advance value corresponding to the SBFD symbols based on a conventional timing advance value, comprises: the target timing advance value being a product of the conventional timing advance value and the adjustment factor.

30. The apparatus according to claim 29, wherein the apparatus further comprises:
a processing module configured to set contiguous N symbols starting from a last symbol of the SBFD symbols as invalid symbols, or set contiguous N symbols starting from a first symbol of the non SBFD symbols as invalid symbols; where N is a positive integer;
the transmission module configured to, if uplink data occupies positions of the invalid symbols, prohibit sending the uplink data to the base station on the invalid symbols; or,
if uplink data occupies positions of the invalid symbols and positions of available symbols, and the available symbols are either SBFD symbols or non SBFD symbols, perform rate matching on the uplink data, and send the matched uplink data to the base station on the available symbols; or,
if uplink data occupies positions of the invalid symbols and positions of the available symbols, and the available symbols comprises both SBFD symbols and non SBFD symbols, perform rate matching on the uplink data, and send the matched uplink data to the base station on the available symbols; or, prohibit sending the uplink data to the base station.

31. The apparatus according to claim 29, wherein the reference timing advance value corresponding to the non SBFD symbols is a target value, or the reference timing advance value is calculated based on a conventional timing advance value, wherein calculating the reference timing advance value based on a conventional timing advance value, comprises: the reference timing advance value being a product of the conventional timing advance value and a reference factor, and the reference factor being a value between 0 and 1, or the reference timing advance value is the same as the target timing advance value corresponding to the SBFD symbols; the determination module is further configured to:
receive a timing advance command sent by the base station, and based on the timing advance command, determine the reference timing advance value corresponding to the non SBFD symbols as the target value; or,
receive a timing advance command sent by the base station, and based on the timing advance command, determine that the reference timing advance value corresponding to the non SBFD symbols is a product of the conventional timing advance value and the reference factor; or,
receive a first timing advance command and a second timing advance command sent by the base station, determine the reference factor corresponding to the non SBFD symbols based on the first timing advance command, determine the conventional timing advance value corresponding to the non SBFD symbols based on the second timing advance command, and determine the reference timing advance value corresponding to the non SBFD symbols based on the reference factor and the conventional timing advance value; or,
receive a timing advance follow command sent by the base station, if the timing advance follow command indicates that the reference timing advance value is the same as the target timing advance value, determine the reference timing advance value corresponding to the non SBFD symbols based on the target timing advance value; or,
obtain a configured fixed advance value and based on the fixed advance value, determine the reference timing advance value corresponding to the non SBFD symbols as the target value; or,
obtain a configured fixed reference factor and based on the fixed reference factor and the target timing advance value, determine the reference timing advance value corresponding to the non SBFD symbols.

32. The apparatus according to claim 29, wherein the transmission module is further configured to, if consecutive uplink data is to be transmitted between a last SBFD symbol and a first non SBFD symbol, prohibit sending last uplink data to the base station on the last SBFD symbol; or, prohibit sending first uplink data to the base station on the first non SBFD symbol; or,
if uplink data is to be transmitted in the target slot, and the uplink data occupies both an SBFD symbol and a non SBFD symbol, prohibit sending the uplink data to the base station.

33. The apparatus according to any one of claims 22-28, wherein
the determination module is further configured to receive an enable indicator sent by the base station, the enable indicator being a first value or a second value;
if the enable indicator is the first value, determine the target timing advance value corresponding to the SBFD slots as the target value, or calculate the target timing advance value based on the conventional timing advance value;
if the enable indicator is the second value, determine that the target timing advance value corresponding to the SBFD slots is the conventional timing advance value.

34. A timing advance adjustment apparatus, applied to a base station, and the apparatus comprising:
a determination module configured to, if a next slot of K contiguous SBFD slots is a target slot, determine a target timing advance value corresponding to the SBFD slots; where K is a positive integer, and the target timing advance value is a target value, or the target timing advance value is calculated based on a conventional timing advance value;
a receiving module configured to, if the SBFD slots comprise uplink subbands, receive uplink data sent by a UE in the uplink subbands of the SBFD slots based on the target timing advance value corresponding to the SBFD slots.

35. The apparatus according to claim 34, wherein
calculating the target timing advance value based on a conventional timing advance value, comprises: the target timing advance value being a product of the conventional timing advance value and an adjustment factor, the conventional timing advance value being obtained from a preamble of the UE, and the adjustment factor being a value between 0 and 1; and
the apparatus further comprises:
a transmission module configured to, if the target timing advance value is a target value, send a timing advance command to the UE, the timing advance command being used to cause the UE to determine that the target timing advance value corresponding to the SBFD slots is a target value; or,
if the target timing advance value is a product of a conventional timing advance value and an adjustment factor, send a timing advance command to the UE, the timing advance command being used to cause the UE to determine that the target timing advance value corresponding to the SBFD slots is a product of a conventional timing advance value and an adjustment factor; or,
if the target timing advance value is a product of a conventional timing advance value and an adjustment factor, send a first timing advance command and a second timing advance command to the UE, the first timing advance command being used to cause the UE to determine the adjustment factor corresponding to the SBFD slots, and the second timing advance command being used to cause the UE to determine the conventional timing advance value corresponding to the SBFD slots.

36. The apparatus according to claim 34, wherein
the target slot is an uplink slot, and the apparatus further comprises:
a processing module configured to set contiguous M symbols starting from a last symbol in a last SBFD slot of the K contiguous SBFD slots as invalid symbols, or set contiguous M symbols starting from a first symbol in the uplink slot as invalid symbols; where M is a positive integer;
the transmission module further configured to send invalid symbol configuration information to the UE, the invalid symbol configuration information comprising an invalid symbol enable indicator, an invalid symbol position indicator, and an invalid symbol number indicator; or, the invalid symbol configuration information comprising an invalid symbol position indicator and an invalid symbol number indicator; wherein the invalid symbols enable indicator is used to indicate whether the invalid symbols are enabled or not; the invalid symbol position indicator is used to indicate that the invalid symbols are located in the SBFD slot or in the uplink slot; the invalid symbol number indicator is used to indicate a number of the invalid symbols.

37. The apparatus according to claim 34, wherein the target slot is an uplink slot, and the determination module is further configured to:
determine a reference timing advance value corresponding to the uplink slot; wherein the reference timing advance value is a target value, or the reference timing advance value is calculated based on a conventional timing advance value, or the reference timing advance value is the same as the target timing advance value.

38. The apparatus according to claim 37, wherein calculating the reference timing advance value based on a conventional timing advance value, comprises: the reference timing advance value being a product of the conventional timing advance value and a reference factor, and the reference factor being a value between 0 and 1;
the transmission module is further configured to: if the reference timing advance value is a target value, send a timing advance command to the UE, the timing advance command being used to cause the UE to determine that the reference timing advance value corresponding to the uplink slot is a target value; or,
if the reference timing advance value is a product of the conventional timing advance value and a reference factor, send a timing advance command to the UE, the timing advance command being used to cause the UE to determine that the reference timing advance value corresponding to the uplink slot is a product of the conventional timing advance value and a reference factor; or,
if the reference timing advance value is a product of the conventional timing advance value and the reference factor, send a first timing advance command and a second timing advance command to the UE, the first timing advance command being used to cause the UE to determine the reference factor corresponding to the uplink slot, and the second timing advance command being used to cause the UE to determine the conventional timing advance value corresponding to the uplink slot; or,
if the reference timing advance value is the same as the target timing advance value, send a timing advance follow command to the UE, the timing advance follow command being used to cause the UE to determine whether the reference timing advance value corresponding to the uplink slot is the same as the target timing advance value corresponding to the SBFD slots.

39. The apparatus according to any one of claims 34-38, wherein the target slot is a mini-slot, and the mini-slot comprises both SBFD symbols and non SBFD symbols;
wherein the target timing advance value corresponding to the SBFD symbols is a target value, or the target timing advance value corresponding to the SBFD symbols is calculated based on a conventional timing advance value;
wherein calculating the target timing advance value corresponding to the SBFD symbols based on a conventional timing advance value, comprises: the target timing advance value being a product of the conventional timing advance value and the adjustment factor.

40. The apparatus according to claim 39, wherein the apparatus further comprises:
a processing module configured to set contiguous N symbols starting from a last symbol of the SBFD symbols as invalid symbols, or set contiguous N symbols starting from a first symbol of the non SBFD symbols as invalid symbols; where N is a positive integer;
the transmission module further configured to send invalid symbol configuration information to the UE, wherein the invalid symbol configuration information comprises an invalid symbol enable indicator, an invalid symbol position indicator, and an invalid symbol number indicator; or, the invalid symbol configuration information comprises an invalid symbol position indicator and an invalid symbol number indicator;
wherein the invalid symbol enable indicator is used to indicate whether to the invalid symbols are enabled or not; the invalid symbol position indicator is used to indicate whether the invalid symbols are located in the SBFD symbols or in the non SBFD symbols; the invalid symbol number indicator is used to indicate a number of the invalid symbols.

41. The apparatus according to claim 39, wherein the reference timing advance value corresponding to the non SBFD symbols is a target value, or the reference timing advance value is calculated based on a conventional timing advance value, wherein calculating the reference timing advance value based on a conventional timing advance value, comprises: the reference timing advance value being a product of the conventional timing advance value and the reference factor, and the reference factor being a value between 0 and 1, or the reference timing advance value being the same as the target timing advance value corresponding to the SBFD symbols;
the transmission module further configured to, if the reference timing advance value is a target value, send a timing advance command to the UE, the timing advance command being used to cause the UE to determine that the reference timing advance value corresponding to the non SBFD symbols is a target value; or,
if the reference timing advance value is a product of the conventional timing advance value and the reference factor, send a timing advance command to the UE, the timing advance command being used to cause the UE to determine that the reference timing advance value corresponding to the non SBFD symbols is a product of the conventional timing advance value and the reference factor; or,
if the reference timing advance value is a product of the conventional timing advance value and the reference factor, send a first timing advance command and a second timing advance command to the UE, the first timing advance command being used to cause the UE to determine the reference factor corresponding to the non SBFD symbols, and the second timing advance command being used to cause the UE to determine the conventional timing advance value corresponding to the non SBFD symbols; or,
if the reference timing advance value is the same as the target timing advance value, send a timing advance follow command to the UE, the timing advance follow command being used to determine whether the reference timing advance value corresponding to the non SBFD symbols is the same as the target timing advance value corresponding to the SBFD symbols.

42. The apparatus according to any one of claims 34-38, wherein
the transmission module is configured to send an enable indicator to the UE, the enable indicator being a first or second value; wherein the first value is used to indicate that the UE determines that the target timing advance value corresponding to the SBFD slots is a target value, or that the target timing advance value is calculated based on a conventional timing advance value; the second value is used to indicate that the UE determines that the target timing advance value corresponding to the SBFD slots is the conventional timing advance value.

43. A user equipment comprising a processor and a machine-readable storage medium, wherein the machine-readable storage medium stores machine executable instructions that can be executed by the processor; and the processor is configured to execute the machine executable instructions to implement the method according to any one of claims 1-12.

44. A base station comprising a processor and a machine-readable storage medium, wherein the machine-readable storage medium stores machine executable instructions that can be executed by the processor; and the processor is configured to execute machine executable instructions to implement the method according to any one of claims 13-21.
